# EUROPEAN PATENT APPLICATION

(11) **EP 4 426 038 A1**
(43) Date of publication of application: **04.09.2024**
(21) Application number: 22939371.5
(22) Date of filing: 29.04.2022
(51) Int. Cl.: H04W 72/04

(54) **RESOURCE ALLOCATION METHOD AND APPARATUS, BASE STATION, USER EQUIPMENT, AND STORAGE MEDIUM**

(71) Applicant: New H3C Technologies Co., Ltd., Hangzhou, Zhejiang 310052 (CN)
(72) Inventor: KONG, Lei, Beijing 100102 (CN)
(74) Representative: IPAZ
(86) International application number: PCT/CN2022/090643
(87) International publication number: WO 2023/206524

(57) **Abstract**

A method for resource assignment, device, base station, user equipment and storage medium. In this method, when a base station is provided with configuration information of a full-duplex time slot in a same frequency domain bandwidth of the first cell, the configuration information includes first information indicating resources occupied by a downlink channel in the full-duplex time slot and second information indicating resources occupied by a uplink channel in the full-duplex time slot; the base station sends a first signaling to the user equipment in the first cell, and the first signaling includes configuration information; the user equipment assigns resources for the full-duplex time slot according to the first information and the second information. By applying the technical solution provided by the embodiments of the present application, full-duplex mode communication in the same frequency domain bandwidth is realized.

## Description

### Technical field

The present application relates to the field of communication technology, in particular to a method for resource assignment, device, base station, user equipment and storage medium.

### Background

The current Time-Division Duplex (TDD) communication system adopts Half-Duplex (HD) mode for communication. In order to improve the network throughput, TDD communication system in HD mode is usually configured with more Downlink (DL) time slots, which results in fewer Uplink (UL) time slots and limited uplink transmission rate, resulting in longer uplink transmission delay, which is not conducive to the execution of Ultra-Reliability Low Latency Communication (URLLC) services.

In Full-Duplex (FD) mode, a base station or user equipment in TDD communication system can simultaneously send data and receive data in the same slot/the same OFDM symbol; therefore, the FD mode communication adopted by TDD communication system is an effective way to solve the above problems. However, if FD mode communication is adopted, Self-Interference (SI), inter-cell crosstalk, inter-user interference and other factors that affect the communication quality will be introduced.

### Summary

The purposes of the embodiments of the present application are to provide a method for resource assignment, device, base station, user equipment and storage medium to realize FD mode communication. The specific technical solutions are as follows.

In a first aspect, an embodiment of the present application provides a method for resource assignment, which is applied to a base station, and the method includes:
sending a first signaling to a user equipment in a first cell when the base station is provided with configuration information of a full-duplex time slot in a same frequency domain bandwidth of the first cell, wherein the first signaling includes the configuration information, wherein the configuration information includes first information indicating resources occupied by a downlink channel in the full-duplex time slot, and second information indicating resources occupied by a uplink channel in the full-duplex time slot.

In a second aspect, an embodiment of the present application provides a method for resource assignment, which is applied to a user equipment, and the method includes:
receiving a first signaling sent by a base station, wherein the first signaling includes configuration information, and the configuration information includes first information indicating resources occupied by a downlink channel in a full-duplex time slot in a same frequency domain bandwidth of a first cell, and second information indicating resources occupied by an uplink channel in the full-duplex time slot;
assigning resources for the full-duplex time slot according to the first information and the second information.

In a third aspect, an embodiment of the present application provides a device for resource assignment, which is applied to a base station, and the device comprises:
a sending module, configured to send a first signaling to a user equipment in a first cell when the base station is provided with configuration information of a full-duplex time slot in a same frequency domain bandwidth of the first cell, wherein the first signaling includes the configuration information, wherein the configuration information includes first information indicating resources occupied by a downlink channel in the full-duplex time slot, and second information indicating resources occupied by a uplink channel in the full-duplex time slot.

In a fourth aspect, an embodiment of the present application provides a device for resource assignment, which is applied to a user equipment, and the device comprises:
a receiving module, to receive a first signaling sent by a base station, wherein the first signaling includes configuration information, and the configuration information includes first information indicating resources occupied by a downlink channel in a full-duplex time slot in a same frequency domain bandwidth of a first cell, and second information indicating resources occupied by an uplink channel in the full-duplex time slot;
an assignment module, to assign resources for the full-duplex time slot according to the first information and the second information.

In a fifth aspect, an embodiment of the present application provides a base station, which comprises a processor and a machine-readable storage medium having stored thereon machine-executable instructions that can be executed by the processor, wherein the machine-executable instructions cause the processor to perform steps of the method provided in the first aspect.

In a sixth aspect, an embodiment of the present application provides a user equipment, which comprises a processor and a machine-readable storage medium having stored thereon machine-executable instructions that can be executed by the processor, wherein the machine-executable instructions cause the processor to perform steps of the method provided in the second aspect.

In a seventh aspect, an embodiment of the present application provides a machine-readable storage medium having stored thereon machine-executable instructions that can be executed by a processor, wherein the machine-executable instructions cause the processor to perform steps of the method provided in the first aspect.

In an eighth aspect, an embodiment of the present application provides a machine-readable storage medium having stored thereon machine-executable instructions that can be executed by a processor, wherein the machine-executable instructions cause the processor to perform steps of the method provided in the second aspect.

In a ninth aspect, an embodiment of the present application provides a computer program product, wherein the computer program product causes a processor to perform steps of the method provided in the first aspect.

In a tenth aspect, an embodiment of the present application provides a computer program product, wherein the computer program product causes a processor to perform steps of the method provided in the second aspect.

In this embodiment of the present application, for a full-duplex time slot, the base station configures the first information indicating resources occupied by a downlink channel in the full-duplex time slot, and second information indicating resources occupied by a uplink channel in the full-duplex time slot. When configuring the first information and the second information, the base station can minimize the interference in the full-duplex time slot, and guarantee the communication quality. In addition, the base station and the UE adopt full-duplex time slot for communication, which is no longer limited by the less deployment of uplink time slots in the half-duplex mode, which increasing the coverage of the cell, improving the uplink transmission rate and reducing the uplink transmission delay.

### Brief Description of the Drawings

In order to illustrate embodiments of the present application and technical solutions of the prior art more clearly, the following briefly introduces the drawings needed in the embodiments and the prior art. Obviously, the drawings in the following description are only some embodiments of the present application, and for those of ordinary skill in the art, other embodiments may be obtained according to these drawings without any creative effort.
Fig. 1(a) is a schematic diagram of a HD mode communication.
Fig. 1(b) is a schematic diagram of a FD mode communication.
Fig. 2 is a structural schematic diagram of a resource assignment system provided by an embodiment of the present application.
Fig. 3 is a first schematic flowchart of a method for resource assignment provided by an embodiment of the present application.
Fig. 4(a) is a first schematic diagram of a frame structure of a full-duplex time slot provided by an embodiment of the present application.
Fig. 4(b) is a second schematic diagram of a frame structure of a full-duplex time slot provided by an embodiment of the present application.
Fig. 5 is a schematic diagram of a mapping relationship between frequency domain subbands, RBs and OFDM subcarriers provided by an embodiment of the present application.
Fig. 6 is a schematic diagram of frequency domain resource assignment of a full-duplex time slot provided by an embodiment of the present application.
Fig. 7 is a first schematic diagram of time domain resource assignment of a full-duplex time slot provided by an embodiment of the present application.
Fig. 8(a) is a second schematic diagram of time domain resource assignment provided by an embodiment of the present application.
Fig. 8(b) is a third schematic diagram of time domain resource assignment provided by an embodiment of the present application.
Fig. 9 is a schematic diagram of a start point, at which the configuration information takes effect, a cycle period and a duration provided in an embodiment of the present application.
Fig. 10 is a schematic diagram showing no overlap of uplink and downlink channel resources occupied by UEs provided by an embodiment of the present application.
Fig. 11(a) is a first schematic diagram showing overlap of uplink and downlink channel resources occupied by UEs provided by an embodiment of the present application.
Fig. 11(b) is a second schematic diagram showing overlap of uplink and downlink channel resources occupied by UEs provided by an embodiment of the present application.
Fig. 12 is a second schematic flowchart of the method for resource assignment provided by an embodiment of the present application.
Fig. 13 is a schematic diagram of a first structure of the device for resource assignment provided by an embodiment of the present application.
Fig. 14 is a schematic diagram of a second structure of the device for resource assignment provided by an embodiment of the present application.
Fig. 15 is a schematic structural diagram of a base station provided by an embodiment of the present application.
Fig. 16 is a schematic structural diagram of a UE provided by an embodiment of the present application.

### Detailed Description

The technical solutions in the embodiments of the present application will be clearly and completely described below with reference to the drawings in the embodiments of the present application. Obviously, the described embodiments are only part of the embodiments of the present application, but not all of them. Based on the embodiments in the present application, all other embodiments obtained by those ordinary skilled in the art based on the present application belong to the scope of protection of the present application.

FD time slot refers that in the same time slot/on the same Orthogonal Frequency Division Multiplexing (OFDM) symbol in the same slot, the base station or the UE simultaneously sends and receives data.

At present, the frame structure of TDD may be completed by means of semi-static configuration and dynamic indication. Specifically, the high-level signaling defines a Slot Format Combination (SFC) through a Slot Format Indicator (SFI), the base station determines a slot structure that meets the business requirements according to the service to be supported, and adds the determined slot structure to the SFC, as shown in Table 1.

**Table 1**

| Time slot structure index | OFDM symbols in time slots | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 0 | D | D | D | D | D | D | D | D | D | D | D | D | D | D |
| 1 | U | U | U | U | U | U | U | U | U | U | U | U | U | U |
| 2 | F | F | F | F | F | F | F | F | F | F | F | F | F | F |
| ... | ... | | | | | | | | | | | | | |
| 55 | D | D | F | F | F | U | U | U | D | D | D | D | D | D |
| 56-254 | reserve | | | | | | | | | | | | | |
| 255 | UE determines the time slot structure according to the uplink and downlink general configuration, the uplink and downlink special configuration and the DCI format. | | | | | | | | | | | | | |

In Table 1, D indicates DL compliance, U indicates UL compliance, F indicates flexible compliance, and compliance indicates OFDM compliance. In Table 1, only the OFDM symbols in the time slots are 0-13 as an example for description, but in practice, the OFDM symbols in time slots may also be 0-7 or 0-8.

In embodiments of the present application, resource assignment may also be referred to as channel resource assignment, and resource assignment is divided into time domain resource assignment and frequency domain resource assignment. The following describes a resources assignment of downlink channel as an example.

### 1. Time domain resource assignment:

A time domain resource assignment field in the Downlink Control Information (DCI) is used to indicate a time domain position of the downlink channel. There are 4 bits in this field, and its value ranges from 0 to 15. If a value of the time domain resource assignment field is m, m+1 indicates a row index of a time domain resource assignment table, and the information in this row will specifically indicate time domain resources of a Physical Downlink Shared Channel (PDSCH). There are two ways to indicate:
1) one is to directly indicate three pieces of information: a time slot offset K0 between a PDSCH and a Physical Downlink Control Channel (PDCCH) that schedules the PDSCH, a start symbol S of the PDSCH in the slot, and a length symbol L of the PDSCH duration.
2) another is to indicate the time slot offset K0 between the PDSCH and the PDCCH that schedules the PDSCH and a Start Length Indication Value (SLIV). According to the SLIV, a User Equipment (UE) may calculate the start symbol S of PDSCH in the slot and the symbol length L of the PDSCH duration.

### 2. Frequency domain resource assignment:

A frequency domain resource assignment field in DCI is used to indicate a frequency domain resource assignment of a downlink channel. PDSCH frequency domain resource assignment may be divided into two types: Type 0 and Type 1, Type 0 supports discontinuous resource assignment, which may obtain frequency diversity gain, and Type 1 supports continuous resource assignment, which may reduce the number of bits required in this field.
1) Type 0 resource assignment type:
   For discontinuous resource assignment type (i.e., Type 0 resource assignment type), a Resource Block Group (RBG) is a Virtual Resource Block Group (VRBG), which consists of P consecutive VRBs, and the specific number is determined by the resource block group size (RBG-Size) and Band Width Part (BWP) of high-level parameters. Under the Type 0 resource assignment type, the frequency domain resource assignment field is used as a bitmap to indicate which RBGs are assigned to the downlink channel, for example, each of bits in one bitmap represents one RBG, the highest bit corresponds to RBG 0, and so on. In bitmap, a bit of 1 indicates that the corresponding RBG is assigned to the downlink channel, and a bit of 0 indicates that the corresponding RBG is not assigned to the downlink channel, so that the frequency domain resources may be flexibly scheduled. In general, RBG may be directly mapped to physical resources with the same number.
2) Type 1 resource assignment type:
   For continuous resource assignment type (i.e. Type 1 resource assignment type), the frequency domain resource assignment field will not be used as a bitmap, but will indicate a Resource Indicator Value (RIV). According to the RIV, the UE may calculate and obtain the starting Resource Block (RB) of the downlink channel and the number of RBs occupied.

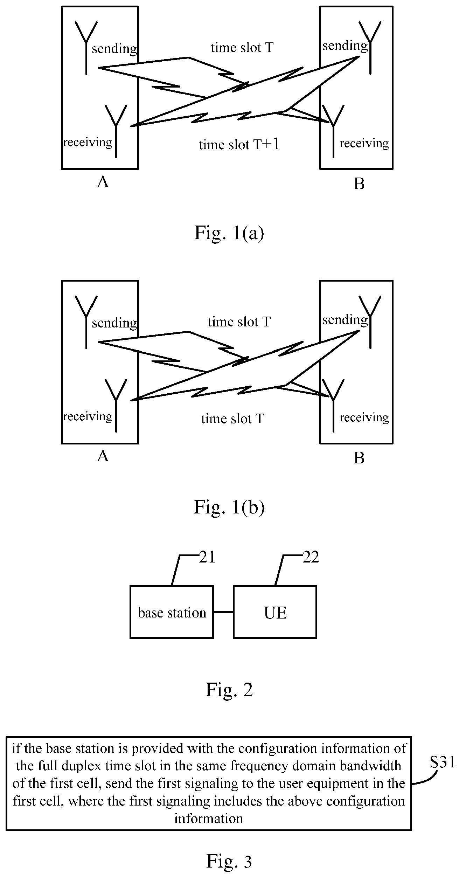

TDD communication system includes base station and UE. The present TDD communication system adopts Half-Duplex (HD) mode for communication. In HD mode, a frame structure is strictly divided into DL time slot, UL time slot and Special (S) time slot, among which, S time slot may be used for DL time slot, or used for UL time slot, or used for Guard Period (GP). When using FD mode communication, the TDD communication system may only receive data or send data in one time slot, as shown in the schematic diagram of HD communication mode in Fig. 1(a), in T time slot, equipment A sends data and equipment B receives data; only in time slot T+1, equipment A can receive data and equipment B can send data.

Throughput of current networks (especially 5G networks) is increasing gradually. In order to improve the network throughput, a TDD communication system in HD mode is usually equipped with more DL time slots, which results in fewer UL time slots, limited uplink transmission rate, longer uplink transmission delay and reduced cell coverage, which is not conducive to the execution of URLLC business.

When using FD mode communication, in the same time slot of the same frequency domain bandwidth/on the same OFDM symbol of the same time slot, the base station or UE may both send and receive data, that is, the base station may send and receive data from the same UE or different UEs at the same time, as shown in the diagram of FD communication mode in Figure 1(b), in T time slot, equipment A may send and receive data, and equipment B may receive and send data. Therefore, TDD communication system adopts FD mode for communication, which is an effective way to solve the above problems. However, using FD mode communication will introduce factors that affect communication quality, such as SI, inter-cell crosstalk and inter-user interference.

To solve the above problems, an embodiment of the present application provides a resource assignment system, as shown in Fig. 2, which includes a base station 21 and a UE 22, wherein the base station may be a gNB base station (i.e., a 5G base station), or an NB base station (i.e., a 4G base station), and may also be a base station of other standards, which is not limited. Fig. 2 illustrates a UE as an example, and does not play a limiting role. The base station 21 may cover one cell or multiple cells, and accordingly, the resource assignment system may include UEs in one cell or UEs in multiple cells.

During resource allocation, the base station 21 obtains configuration information of a full-duplex time slot in the same frequency domain bandwidth of a first cell, where the configuration information includes first information indicating resources occupied by a downlink channel in the full-duplex time slot and second information indicating resources occupied by a uplink channel in the full-duplex time slot; and sends a first signaling to the UE 22 in the first cell, where the first signaling includes the above configuration information. The UE 22 receives the first signaling sent by the base station, and assigns resources for the full-duplex time slot in the same frequency domain bandwidth according to the first information and the second information.

In the embodiment of the present application, for a full-duplex time slot, the base station configures the first information indicating resources occupied by the downlink channel in the full-duplex time slot, and the second information indicating resources occupied by the uplink channel in the full-duplex time slot. When configuring the first information and the second information, the base station can minimize the interference in the full-duplex time slot, and guarantee the communication quality. In addition, the base station and the UE adopt full-duplex time slot for communication, which is no longer limited by the less deployment of uplink time slot in half-duplex mode, which increases the cell coverage, improves the uplink transmission rate, and reduces the uplink transmission delay.

The method for resource assignment provided by the embodiment of the present application will be explained in detail with reference to the following specific examples.

As shown in Fig. 3, a method for resource assignment is provided, which is applied to a base station, in the base station, configuration information of a full-duplex time slot in the same frequency domain bandwidth of the first cell may be preset, and the configuration information includes first information indicating resources occupied by downlink channels in the full-duplex time slot and second information indicating resources occupied by uplink channels in the full-duplex time slot.

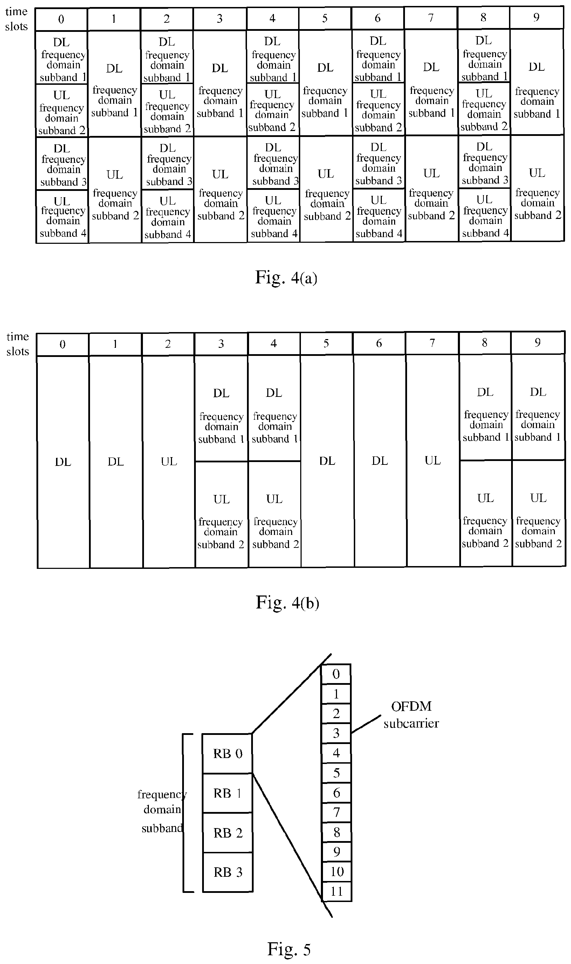

In the embodiment of the present application, the first cell is any cell covered by the base station, and all time slots of the first cell may adopt full-duplex time slots, as shown in Fig. 4(a), time slots 0-9 shown in Fig. 4(a) all have DL channels and UL channels, thus time slots 0-9 are all full-duplex time slots. The first cell may also use a mixture of half-duplex time slots and full-duplex time slots, as shown in Fig. 4(b), in time slots 0-9 shown in Fig. 4(b), time slots 0-1 and 5-6 are configured as DL channels, time slots 2 and 7 are configured as UL channels, and time slots 3-4 and 8-9 have both DL channels and UL channels, therefore, time slots 0-2 and 5-7 are half-duplex time slots, and time slots 3-4 and 8-9 are full-duplex time slots.

A cell may include one or more full-duplex time slots, if a cell includes multiple full-duplex time slots, the frame structures of these multiple full-duplex time slots may be the same, as shown in Fig. 4(b), the configurations of full-duplex time slots 3-4 and 8-9 are the same, the frame structures of these multiple full-duplex time slots may also be different, as shown in Fig. 4(a), there are two configurations of full-duplex time slots, time slots 0, 2, 4, 6 and 8 are of one configuration, while time slots 1, 3, 5, 7 and 9 are of another configuration.

Both resources occupied by downlink channel and resources occupied by uplink channel include time domain resources and frequency domain resources. When assigning resources to the first cell, the base station may obtain the configuration information of full-duplex time slots of the first cell. If the first cell has multiple configuration modes of full-duplex time slots, as shown in Fig. 4(a), the base station may set multiple sets of configuration information, and one set of configuration information corresponds to one configuration mode.

In this embodiment of the present application, the base station may provide a configuration interface, and the user inputs key information to be configured on the configuration interface, such as SLIV, the number of RBs included in the frequency domain subband, and so on. The base station generates configuration information according to the key information input by the user through the configuration interface. This configuration information acquisition method has low learning cost and high configuration efficiency.

In this embodiment of the present application, the user may also directly input a configuration file to the base station, and the base station extracts the aforementioned configuration information from the configuration file; the configuration information may also be stored in the base station in advance, and when it is necessary to assign resources and schedule UEs, the base station acquires the configuration information stored in advance. This is not limited.

The above method for resource assignment comprises the following steps:
Step S31, sending a first signaling to a user equipment in a first cell when the base station is provided with configuration information of a full-duplex time slot in the same frequency domain bandwidth of the first cell, where the first signaling includes the above configuration information .

In this embodiment of the present application, the first signaling carrying the above configuration information may be a broadcast signaling, such as System Information Broadcast (SIB), may also be unicast signaling, or may be user-specific signaling, Media Access Control-Control Element (MAC-CE) or DCI, etc.

After obtaining the configuration information, the base station carries the configuration information in the first signaling and sends the first signaling to the UE in the first cell.

In the embodiment of the present application, for a full-duplex time slot, the base station configures the first information of resources occupied by the downlink channel in the full-duplex time slot and the second information of resources occupied by the uplink channel in the full-duplex time slot. When configuring the first information and the second information, the base station can minimize the interference in the full-duplex time slot and guarantee the communication quality. In addition, the base station and the UE adopt full-duplex time slot for communication, which is no longer limited by the less deployment of uplink time slots in half-duplex mode, which increases the cell coverage, improves the uplink transmission rate, and reduces the uplink transmission delay.

As mentioned above, in the embodiment of the present application, resources may include frequency domain resources and time domain resources, that is, resource assignment may be divided into frequency domain resource assignment and time domain resource assignment.

For frequency domain resource assignment, the above-mentioned first information may be used to indicate the frequency domain subband occupied by the downlink channel, and the second information may be used to indicate the frequency domain subband occupied by the uplink channel.

In the present application embodiment, the working bandwidth of one cell is divided into a plurality of frequency domain subbands, one frequency domain subband is composed of a plurality of RBs/several RBGs, and one RB is composed of a plurality of OFDM subcarriers. The mapping relationship among frequency domain subbands, RB and OFDM subcarriers is shown in Fig. 5. In Fig. 5, one frequency domain subband is composed of 4 RBs, RB 0-4, and each RB is composed of 12 OFDM subcarriers, OFDM subcarriers 0-11.

In this embodiment of the present application, the uplink channel and the downlink channel are assigned different frequency subbands, and the interference between the uplink channel and the downlink channel in the full-duplex time slot may be effectively reduced by using different frequency subbands to send and receive data.

In some embodiments, the base station may indicate the frequency domain resource assignment of the uplink channel and the downlink channel through a bitmap, that is, the aforementioned configuration information may represent the first information and the second information by a bitmap, and bits in the bitmap correspond to frequency domain subbands one by one.

In one example, the aforementioned configuration information uses a first bitmap to represent the first information and the second information; when a bit is a first preset value, it indicates that a frequency domain subband corresponding to the bit is occupied by the downlink channel, and when a bit is a second preset value, it indicates that a frequency domain subband corresponding to the bit is occupied by the uplink channel. The first preset value may be 0 or 1, and the second preset value may be 0 or 1, which is not limited, as long as the first preset value is different from the second preset value.

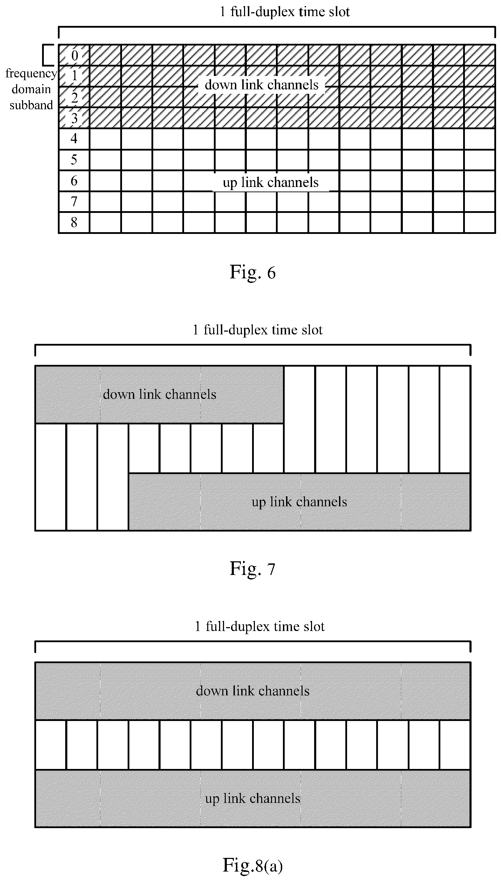

For example, the first preset value is 0, and the second preset value is 1, Fig. 6 is a schematic diagram of frequency domain resource assignment of a full-duplex time slot, in which each row represents one frequency domain subband and each column represents one OFDM symbol. In Fig. 6, frequency domain subbands 0-3 are assigned to a downlink channel, and frequency domain subbands 4-8 are assigned to an uplink channel. At this time, the first bitmap generated by the base station is [0,0,0,0,1,1,1,1,1,1]; in this bitmap, the leftmost bit is the 0th bit, the Xth bit corresponds to the frequency domain subband X, and the values of 0 indicate that the corresponding frequency domain subbands are occupied by the downlink channel; the value of 1 indicates that the corresponding frequency domain subband is occupied by the uplink channel.

In another example, the aforementioned configuration information uses a second bitmap to represent the first information and uses a third bitmap to represent the second information, in the second bitmap, when a bit is a first preset value, it indicates that a frequency domain subband corresponding to the bit is occupied by the downlink channel; in the third bitmap, when a bit is a first preset value, it indicates that a frequency domain subband corresponding to the bit is occupied by the uplink channel.

For example, the first preset value is 1, and still taking Fig. 6 as an example for illustration. In Fig. 6, frequency domain subbands 0-3 are assigned to a downlink channel, and frequency domain subbands 4-8 are assigned to an uplink channel. At this time, the second bitmap generated by the base station is [1, 1, 1, 1, 0, 0, 0, 0], and the third bitmap generated by the base station is [0, 0, 0, 1, 1, 1, 1], values of 1 indicate that the corresponding frequency domain subbands are occupied by the corresponding channel.

In the embodiment of the present application, the base station transmits the resource configuration information to the UE in a form of a bitmap, and the representation form of the bitmap is concise and clear, which enables the base station to accurately transmit the resource configuration information to the UE and improves the resource assignment efficiency.

In the embodiment of the present application, when assigning frequency domain resources, the base station may also carry the number of RBs contained in the frequency domain subband in the above-mentioned first signaling and send it to the UE to assist in completing the configuration of frequency domain resources.

In some embodiments, the first information may be used to indicate a first start point and RBs occupied by the downlink channel, where the first start point represents a starting RB occupied by the downlink channel, the first information may also be used to indicate the first start point and a RBG occupied by the downlink channel, where the first start point represents a starting RBG occupied by the downlink channel.

Accordingly, the second information may be used to indicate the number of RBs occupied by the uplink channel and the second start point, where the second start point represents a starting RB occupied by the uplink channel; the second information may also be used to indicate the number of RBGs occupied by the uplink channel and the second start point, where the second start point represents the starting RBG occupied by the uplink channel.

In the embodiment of the present application, even if the UE does not support the function of frequency domain subbands, the base station may realize the resource assignment of the full-duplex time slot in the same frequency domain bandwidth.

In the embodiment of the present application, the first cell has an adjacent cell, the base station itself and the base station may negotiate with each other so that the frame structures of the first cell and the adjacent cell are the same, for example, both the first cell and the adjacent cell adopt the frame structure shown in Fig. 4(b), which may effectively reduce the inter-cell uplink and downlink interference.

In some embodiments, in order to improve the flexibility of resource assignment and realize flexible resource assignment according to business requirements, the frame structures of the first cell and the adjacent cell may be different, for example, the first cell adopts the frame structure shown in Fig. 4(a) and the adjacent cell adopts the frame structure shown in Fig. 4(b).

When the frame structures of the first cell and the adjacent cells are different, in order to reduce the inter-cell uplink and downlink interference and improve the communication quality, the base station may communicate with the UE in a beam forming mode or a different frequency networking mode.

In one example, both the first cell and the neighboring cells are areas covered by the base station. In this case, the base station may adjust the frame structures of the first cell and the neighboring cells according to the actual requirements. For example, in order to reduce the inter-cell uplink and downlink interference, the base station adjusts the frame structure of the first cell to the frame structure of the adjacent cell, or adjusts the frame structure of the adjacent cell to the frame structure of the first cell. For another example, in order to improve the flexibility of resource assignment and realize flexible resource assignment according to business requirements, the base station arbitrarily adjusts the frame structure of the first cell and the frame structure of the adjacent cells.

In another example, the first cell is an area covered by the base station, and the neighboring cells are areas covered by other base stations. In this case, other base stations may send a message to this base station, which indicates the frame structure of neighboring cells; the base station receives the messages sent by other base stations, and then adjusts the frame structure of the first cell according to the messages according to the actual demand. For example, in order to reduce the inter-cell uplink and downlink interference, the base station adjusts the frame structure of the first cell to the frame structure of the neighboring cell. For another example, in order to improve the flexibility of resource assignment and flexibly assign resources according to business requirements, the base station arbitrarily adjusts the frame structure of the first cell.

Similarly, the base station may send a message to other base stations, which indicates the frame structure of the first cell; other base stations receive the message sent by the base station, and then adjust the frame structure of adjacent cells according to the message according to the actual demand.

For time domain resource assignment, the first information and the second information may be represented in various forms.

In some embodiments, the first information and the second information may be represented in a default manner. For example, the above-mentioned first information may include a first start OFDM symbol occupied by the downlink channel and a first OFDM symbol length corresponding to the downlink channel, and the second information may include a second start OFDM symbol occupied by the uplink channel and a second OFDM symbol length corresponding to the uplink channel.

In other embodiments, the first information and the second information may use SLIVs, for example, the first information includes a first SLIV corresponding to the downlink channel, and the second information includes a second SLIV corresponding to the uplink channel. The first SLIV is determined according to the first start OFDM symbol occupied by the downlink channel and the first OFDM symbol length corresponding to the downlink channel, and the second SLIV is determined according to the second start OFDM symbol occupied by the uplink channel and the second OFDM symbol length corresponding to the uplink channel.

In one example, the base station may determine the SLIVs by using the following formulas.

```
     if (L-1) <= 7 then
            SLIV = 14 x (L-1) + S
     else
            SLIV = 14 x (14-L+1) + (14-1-S)
                 where 0 < L <= 14 - S
                           S = start OFDM symbol
                           L = OFDM symbol length
```

In the above formula, only one slot including 14 OFDM symbols is taken as an example for description, which is not limited.

For example, Fig. 7 is a schematic diagram of time domain resource assignment of a full-duplex time slot. In Fig. 7, each column represents one OFDM symbol. From the left side, the values of OFDM symbols are 0, 1, 2, 3 ... 13, respectively. In Fig. 7, the start OFDM symbol of the time domain resource of the downlink channel is 0, and the OFDM symbol length is 8, according to the above formula, the SLIV is calculated to be 14 * (8-1)+0 = 98; in Fig. 7, the start OFDM symbol of the time domain resource of the uplink channel is 3, and the OFDM symbol length is 11, according to the above formula, the SLIV is calculated to be 14*(14-11+1)+(14-1-3)=66.

In the embodiment of the present application, when assigning time domain resources, the base station may detect whether the base station is configured with the first start OFDM symbol and the first OFDM symbol length. If it is detected that the base station is configured with the first start OFDM symbol and the first OFDM symbol length, the base station determines the first information according to the configured first start OFDM symbol and the first OFDM symbol length; if it is not detected that the base station is configured with the first start OFDM symbol and the first OFDM symbol length, the base station may assign the start OFDM symbol of the full-duplex time slot as the first start OFDM symbol, and assign the OFDM symbol length of the full-duplex time slot as the first OFDM symbol length, and determine the first information according to the assigned first start OFDM symbol and the first OFDM symbol length.

Similarly, when assigning time domain resources, the base station may detect whether the base station is configured with a second start OFDM symbol and a second OFDM symbol length. If it is detected that the base station is configured with the second start OFDM symbol and the second OFDM symbol length, the base station determines the second information according to the configured second start OFDM symbol and the second OFDM symbol length; if it is not detected that the base station is configured with the second start OFDM symbol and the second OFDM symbol length, the base station may assign the start OFDM symbol of the full-duplex time slot as the second start OFDM symbol, and assign the OFDM symbol length of the full-duplex time slot as the second OFDM symbol length, and determine the second information according to the assigned second start OFDM symbol and the second OFDM symbol length. Here, the expressions of the first information and the second information may be referred to the previous description.

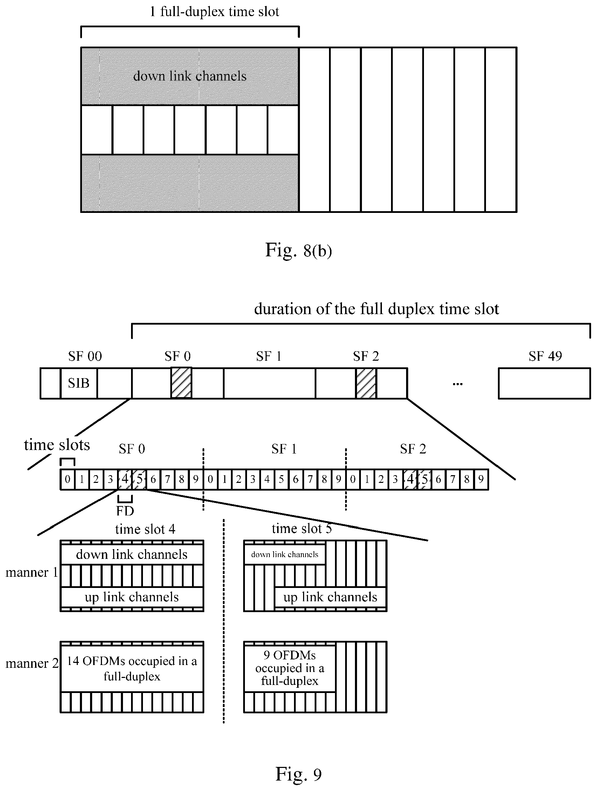

For example, Fig. 8(a) and Fig. 8(b) are schematic diagrams of time domain resource assignment, respectively, in which each column represents one OFDM symbol, and values of the OFDM symbols are 0, 1, 2, 3, ... from the left side, respectively, in Fig. 8(a), one full-duplex time slot includes 14 OFDM symbols, and in Fig. 8(b), one full-duplex time slot includes 7 OFDM symbols, when it is not configured with the start OFDM symbols (including the first and second start OFDM symbols) and OFDM symbol lengths (including the first and second OFDM symbol lengths), the base station assigns all the OFDM symbols of one full-duplex time slot to the uplink channel and the downlink channel, as shown in Fig. 8(a), all 14 OFDM symbols included in the full-duplex time slot are assigned to the uplink channel, and 14 OFDM symbols included in the full-duplex time slot are assigned to the downlink channel; as shown in Fig. 8(b), all 7 OFDM symbols included in the full-duplex time slot are assigned to the uplink channel, and all 7 OFDM symbols included in the full-duplex time slot are assigned to the downlink channel.

In some embodiments, in order to reduce the inter-cell interference, the OFDM symbol length occupied by the downlink channel and the uplink channel in the full-duplex time slot is the same as the OFDM symbol length of the full-duplex time slot. As shown in Fig. 7, Fig. 8(a) and Fig. 8(b), the downlink channel and the uplink channel occupy all OFDM symbols included in the full-duplex time slot, that is, the OFDM symbol length occupied by the downlink channel and the uplink channel is the same as the OFDM symbol length of the full-duplex time slot.

If there are unoccupied OFDM symbols in the full-duplex time slot of one cell, that is, there are flexible symbols, the flexible symbols may be assigned to the downlink channel or the uplink channel, which makes the flexible symbols uncertain, which may lead to the opposite direction of data transmission with the neighboring cells. For example, an OFDM symbol of the first cell, as a flexible symbol, is assigned to the downlink channel, and while the OFDM symbol of the neighboring cell is assigned to the uplink channel, which brings inter-cell interference. In this embodiment of the present application, the OFDM symbol length occupied by the downlink channel and the uplink channel in the full-duplex time slot is the same as the OFDM symbol length of the full-duplex time slot, which may effectively avoid the above problems and reduce the inter-cell interference.

In some embodiments, the configuration information carried by the first signaling may further include the number of full-duplex time slots included in at least one system frame. For example, a system frame includes 10 time slots, and the configuration information indicates that 2 full-duplex time slots included in system frame 1, that is, there are 2 full-duplex time slots among the 10 time slots included in system frame 1. For another example, the configuration information may also indicate 2 full-duplex time slots included in system frame 1 and 3 full-duplex time slots included in system frame 2, that is, there are 2 full-duplex time slots among the 10 time slots included in system frame 1, and there are 3 full-duplex time slots among the 10 time slots included in system frame 2.

In some embodiments, the configuration information may further include a fourth bitmap of at least one system frame, in which bits correspond to time slots one by one. In the fourth bitmap, when a bit is a third preset value, it indicates that a time slot corresponding to the bit is a full-duplex time slot; in the fourth bitmap, when a bit is a fourth preset value, it indicates that a time slot corresponding to the bit is a half-duplex time slot. The third preset value may be 0 or 1, and the fourth preset value may be 0 or 1, which may be set according to the implementation requirements, as long as it is ensured that the third preset value is different from the fourth preset value.

For example, the third preset value is 1, one system frame includes 10 time slots, and the fourth bitmap includes 10 bits, in the fourth bitmap, from the left side, the time slots corresponding to each of bits are 0, 1, 2, ... 9. If the configuration information includes that the fourth bitmap 1 of system frame 1 is [0,0,0,0,1,1,0,0,0,0], it indicates that time slot 4 and time slot 5 are full-duplex time slots, and other slots are half-duplex time slots.

Through the above fourth bitmap, the full-duplex time slot in one system frame may be accurately determined.

In some embodiments, multiple sets of configuration information may be set in the base station, and each of the sets of configuration information has one assignment sequence number (which may be represented by a pattern sequence number). The base station numbers the full-duplex time slots in the system frame to obtain the index number of each of full-duplex time slots. Here, the index number of a full-duplex time slot is the number of full-duplex time slot in the cycle period of the configuration information. For example, the cycle period of the configuration information is 2 system frames, if configuration information in system frame 0 and system frame 1 is valid, time slots 4 and 5 in system frame 0 are full-duplex time slots, and time slots 5 and 6 in system frame 1 are full-duplex time slots, the index number of time slot 4 in system frame 0 is 0, the index number of time slot 5 in system frame 0 is 1, the index number of time slot 5 in system frame 1 is 3, and the index number of time slot 6 in system frame 1 is 4. The cycle period of configuration information will be explained in detail later, and will not be repeated here. For the above multiple sets of configuration information, the base station may carry the above multiple sets of configuration information in one first signaling and send them to the UE, or carry them in multiple first signaling and send them to the UE, which is not limited.

In a system frame, the configuration information adopted by each full-duplex time slot may be the configuration information corresponding to a target assignment sequence number, which is obtained by performing a mod operation on an index number of this full-duplex time slot and the number of the multiple sets of configuration information.

For example, the pattern sequence number corresponding to each full-duplex time slot may be determined according to the output result of the formula mod (index number of a full-duplex time slot, total number of patterns), and mod(x, y) represents the remainder of dividing x by y.

In a system frame, the configuration information adopted by each full-duplex time slot may also be the configuration information of the full-duplex time slot specified in the first signaling. For example, time slot 4 and time slot 5 in system frame 0 are full-duplex time slots, and the first signaling sent by the base station specifies that time slot 4 in system frame 0 corresponds to configuration information 1 and time slot 5 in system frame 0 corresponds to configuration information 3.

In a system frame, the configuration information used for each full-duplex time slot may also be determined according to a fifth bitmap, which may be carried in the first signaling. The bits in the fifth bitmap correspond to the full-duplex time slots in the system frame one by one, and in the fifth bitmap, the full-duplex time slots corresponding to the bits use the configuration information corresponding to the values of the bits. For example, the values of bits in the fifth bitmap include 0 and 1, the value 0 of the bit corresponding to configuration information 0 and the value 1 of the bit corresponding to configuration information 1. In the fifth bitmap, from the left side, the number of the full-duplex time slots corresponding to each of bits increases sequentially. If time slot 4 and time slot 5 in system frame 0 are full-duplex time slots, the fifth bitmap is [0,1], which indicates that time slot 4 uses configuration information 0 and time slot 5 uses configuration information 1.

In this embodiment of the present application, the base station may also adopt other ways to realize the matching relationship between the number of full-duplex time slots and the number of types of configuration information of full-duplex time slots, in a system frame, and the matching relationship between full-duplex time slots and configuration information of the full-duplex time slots, which is not limited.

In this embodiment of the present application, the above configuration information is semi-static configuration, and the base station may adjust the configuration information according to actual requirements. In this case, the configuration information included in the first signaling takes effect when the UE reaches the third start point. The third start point may be pre-configured in the UE and the base station, for example, the system frame number corresponding to the third start point is N, and N may be 0, 1 or 2, etc., for another example, the system frame number corresponding to the third start point is odd or even frames. The third start point may also be calculated by the UE according to a certain algorithm, for example, the third start point is obtained by performing a mod operation on the frame number and the duration of the full-duplex time slot, exemplarily, the UE may take the formula mod (system frame number, duration of the full-duplex time slot) =0 as the third start point.

In this embodiment of the present application, the duration of the full-duplex time slot after the configuration information takes effect is the validity period of the configuration information.

The aforementioned duration of the full-duplex time slot may be pre-configured in the UE or may be sent to the UE by the base station through the first signaling, that is, the first signaling may also include the duration of the full-duplex time slot. The duration of the full-duplex time slot may be 50 system frames, 60 system frames or 80 system frames.

In this embodiment of the present application, the validity period of the configuration information includes at least one cycle period of the configuration information, and in each of the cycle periods, the resources of the full-duplex time slots at the same position are the same. For example, the cycle period of the configuration information is 2 system frames, if time slot 4 and time slot 5 of system frame 0 are full-duplex time slots, time slot 4 of system frame 0 and time slot 4 of system frame 2 which are separated by one cycle period are located at the same position, and time slot 5 of system frame 0 and time slot 5 of system frame 2 which are separated by one cycle period are located at the same position. Therefore, time slot 4 and time slot 5 of system frame 2 are full-duplex time slots, and time slot 4 of system frame 0 and time slot 4 of system frame 2 have the same time and frequency resources, and time slot 5 of system frame 0 and time slot 5 of system frame 2 have the same time and frequency resources.

The aforementioned cycle period may be pre-configured in the UE, or may be sent by the base station to the UE through the first signaling, that is, the first signaling may also include the cycle period. The cycle may be set according to actual requirements, for example, the cycle may be 1 system frame, 2 system frames or 3 system frames etc..

Based on the above semi-static configuration, when reaching the third start point, configuration information received by the UE before the third start point takes effect, the resources of the full-duplex time slots are assigned according to the configuration information received before the third start point, and according to the resources indicated by the configuration information, the dispatching of the base station is accepted to receive and send data in the same frequency domain bandwidth.

Take the time domain resources as an example, as shown in Fig. 9, a schematic diagram of the third start point at which the configuration information takes effect, the cycle period of the configuration information and the duration of the full-duplex time slot is shown. Fig. 9 shows that the frame numbers of the System Frame (SF) include SF 0-SF 49, the cycle period N of the configuration information is 2 SFs, and the duration M of the full-duplex time slot is 50 SFs. If mod (SF 0,50) = 0, starting from SF 0, configuration information of the full-duplex time slots received before SF 0 takes effect,. In Fig. 9, the information in the System Information Block (SIB) in SF 00 is the configuration information of the full-duplex time slots, starting from SF 0, the configuration information of the full-duplex time slot takes effect, such as time slot 4 and time slot 5 in the shaded part of SF 0 in Fig. 9, time slot 4 and time slot 5 in SF 0, and time slot 4 and time slot 5 in SF 2 which is separated by a cyclic period from SF 0, have the same resources.

As shown in Fig. 9 in mode 1, all OFDM symbols of time slot 4 in SF 0 are assigned to the downlink channels, correspondingly, all OFDM symbols of time slot 4 in SF 2 are assigned to the downlink channels, in addition, all OFDM symbols of time slot 4 in SF 0 are assigned to the uplink channels, correspondingly, all OFDM symbols of time slot 4 in SF 2 are assigned to the uplink channels. OFDM symbols 0-7 of time slot 5 in SF 0 are assigned to the downlink channel, correspondingly, all OFDM symbols 0-7 of time slot 5 in SF 2 are assigned to the downlink channel, in addition, all OFDM symbols 3-13 of time slot 5 in SF 0 are assigned to the uplink channel, correspondingly, all OFDM symbols 3-13 of time slot 5 in SF 2 are assigned to the uplink channel.

In a system frame, the OFDM symbols included in different full-duplex time slots may be the same, as shown in mode 1 of Fig. 9, all OFDM symbols of time slot 4 and time slot 5 in SF 0 are 0-13; the OFDM symbols included in different full-duplex time slots may also be different, as shown in mode 2 in Fig. 9, all OFDM symbols of time slot 4 in SF 0 are 0-13, and all OFDM symbols of time slot 5 in SF 0 are 0-8.

In a system frame, the OFDM symbols occupied by the uplink and downlink channels in one full-duplex time slot may be the same, as shown in mode 1 in Fig. 9, the resource assignment of the uplink and downlink channels in time slot 4 in SF 0; the OFDM symbols occupied by uplink and downlink channels in a full-duplex time slot may also be different, as shown in mode 2 in Fig. 9, the resource assignment of uplink and downlink channels in time slot 5 in SF 0.

In one system frame, the OFDM symbols occupied by downlink channels in different full-duplex time slots may be the same or different, and the OFDM symbols occupied by uplink channels in different full-duplex time slots may be the same or different.

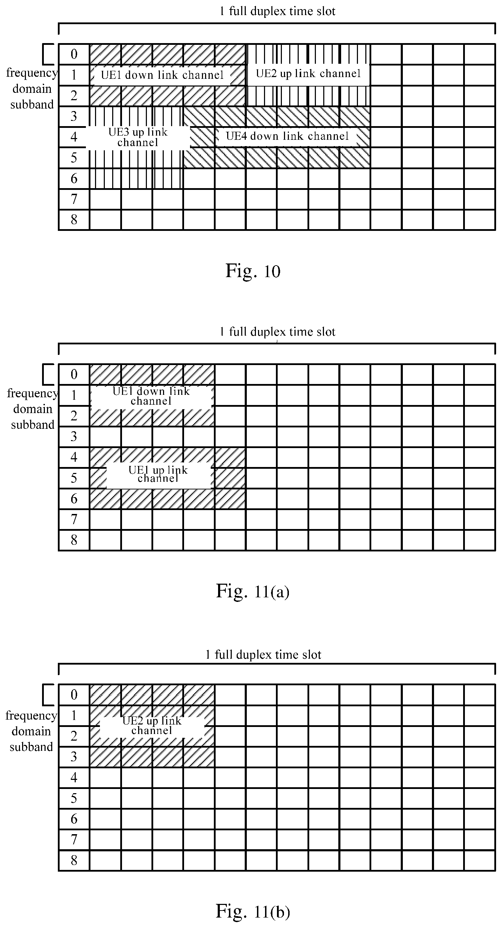

In some embodiments, if the configuration information is not set in the base station, such as the semi-static configuration is not stored in the base station, the base station sends a second signaling to the UE, and the second signaling includes the dispatch information of a full-duplex time slot of the user equipment in the same frequency domain bandwidth. The second signaling may be implemented by using DCI, and the second signaling may be multicast signaling or user-specific signaling. The second signaling may include dispatch information of at least one user equipment, such as the uplink and downlink channel resource assignment as shown in Fig. 10, dispatch information 1 of UE 1, dispatch information 2 of UE 2, dispatch information 3 of UE 3, and dispatch information 4 of UE 4 are respectively carried in 4 second signalings to be sent to the corresponding UE, such as dispatch information 1 is carried in one second signaling to be sent to UE 1, dispatch information 2 is carried in another second signaling to be sent to UE 2, and so on; dispatch information 1 of UE 1, dispatch information 2 of UE 2, dispatch information 3 of UE 3 and dispatch information 4 of UE 4 are carried in the same second signaling to be sent to respective UEs.

If the base station does not use semi-static configured DL&UL resources, the base station may dynamically schedule the UE to send and receive data in the full-duplex time slot by using the second signaling, that is, dynamically schedule the uplink and downlink channel resources.

The aforementioned dispatch information of a user equipment may be used to indicate the resources occupied by the user equipment to send data, that is, the frequency domain subbands occupied by the user equipment to send data, and the OFDM symbols occupied by the user equipment to send data. The dispatch information of a user equipment may also be used to indicate the resources occupied by the user equipment to receive data, that is, the frequency domain subbands occupied by the user equipment to receive data, and the OFDM symbols occupied by the user equipment to receive data.

The dispatch information of a user equipment may also be used to indicate the resources occupied by the user equipment to send data and the resources occupied by the user equipment to receive data.

Based on the above-mentioned dispatch information of the user equipments, the dynamic dispatching of the user equipments may realize that frequency domain subbands occupied by different user equipments overlap, and OFDM symbols occupied by the different user equipments do not overlap; or, frequency domain subbands occupied by different user equipments do not overlap, and OFDM symbols occupied by the different user equipments overlap; or, frequency domain subbands occupied by different user equipments do not overlap, and OFDM symbols occupied by the different user equipments do not overlap. Here, the frequency domain subbands occupied by the user equipment include the frequency domain subbands occupied by the user equipment when sending data and the frequency domain subbands occupied by the user equipment when receiving data, and the OFDM symbols occupied by the user equipment include the OFDM symbols occupied by the user equipment when sending data and the OFDM symbols occupied by the user equipment when receiving data.

In this embodiment of the present application, all or part of the frequency domain subbands occupied by different UEs are the same, which means that the frequency domain subbands overlap; all or part of the OFDM symbols occupied by different UEs are the same, which means that the OFDM symbols overlap. In the foregoing case, the uplink and downlink channel resources occupied by UEs do not overlap.

For example, the base station may dynamically schedule the uplink and downlink channel resources, so that the uplink and downlink channel resources occupied by UEs do not overlap, such as one full-duplex time slot in the same frequency domain bandwidth as shown in Fig. 10, where each row represents one frequency domain subband and each column represents one OFDM symbol, from the left side, the values of OFDM symbols are 0, 1, 2, 3... 13, respectively.

As shown in Fig. 10, the frequency domain subband occupied by the downlink channel of UE 1 (the frequency domain subband occupied for receiving data) is the same as that occupied by the uplink channel of UE 2 (the frequency domain subband occupied for sending data), both of which are frequency domain subbands 0-2, that is, the frequency domain subbands occupied by UE 1 and UE 2 overlap; the OFDM symbols occupied by the downlink channel of UE 1 are 1-5, and the OFDM symbols occupied by the uplink channel of UE 2 are 6-9, that is, the OFDM symbols occupied by the downlink channel of UE 1 are different from the OFDM symbols occupied by the uplink channel of UE 2, and the OFDM symbols occupied by UE 1 and UE 2 do not overlap.

As shown in Fig. 10, the frequency subbands occupied by the uplink channel of UE 3 are 3-6, and the frequency subbands occupied by the downlink channel of UE 4 are 3-5, frequency subbands occupied by the downlink channel of UE 3 and frequency subbands occupied by the uplink channel of UE 4 have the same frequency subbands, such as frequency subbands 3-5, so the frequency subbands occupied by UE 3 and UE 4 overlap; the OFDM symbols occupied by the downlink channel of UE 3 are 1-3, and the OFDM symbols occupied by the uplink channel of UE 4 are 4-9, the OFDM symbols occupied by the downlink channel of UE 3 are different from the OFDM symbols occupied by the uplink channel of UE 4, that is, the OFDM symbols occupied by UE 1 and UE 2 do not overlap.

As shown in Fig. 10, the frequency domain subbands occupied by the downlink channel of UE 1 are 0-2, and the frequency domain subbands occupied by the uplink channel of UE 3 are 3-6, that is, the frequency domain subbands occupied by UE 1 and UE 3 do not overlap; the OFDM symbols occupied by the downlink channel of UE 1 are 1-5, and the OFDM symbols occupied by the uplink channel of UE 3 are 1-3, that is, OFDM symbols occupied by the downlink channel of UE 1 and OFDM symbols occupied by the uplink channel of UE 3 have the same symbols, such as OFDM symbols 1-3, therefore, the OFDM symbols occupied by UE 1 and UE 3 overlap.

As shown in Fig. 10, frequency domain subbands occupied by the downlink channel of UE 1 are 0-2, and frequency domain subbands occupied by the downlink channel of UE 4 are 3-5, that is, frequency domain subbands occupied by UE 1 and UE 4 do not overlap; OFDM symbols occupied by the downlink channel of UE 1 are 1-5, and OFDM symbols occupied by the downlink channel of UE 4 are 4-9, that is, OFDM symbols occupied by the downlink channel of UE 1 and OFDM symbols occupied by the downlink channel of UE 4 have the same symbols, such as OFDM symbols 4-5, so the OFDM symbols occupied by UE 1 and UE 4 overlap.

It can be seen that in Fig. 10, the uplink and downlink channel resources between every two UEs do not overlap, and the resources occupied by different UEs do not overlap, which may reduce the interference between UEs.

Based on the above-mentioned dispatch information of the user equipments, the dynamic dispatching of the user equipments may also realize that the frequency domain subbands occupied by different user equipments overlap and OFDM symbols occupied by the different user equipments overlap. In this case, the uplink and downlink channel resources occupied by the UEs overlap, and the uplink and downlink channel resources are multiplexed between the UEs. The base station may dynamically schedule the uplink and downlink channel resources, so that the uplink and downlink channel resources are multiplexed between the UEs, as long as the interference of uplink and downlink channels between the UEs with the same time-frequency domain resources is within the interference tolerance range.

One full-duplex time slot in the same frequency domain bandwidth as shown in Figs. 11(a) and 11(b), where each rows represents a frequency domain subband and each column represents an OFDM symbol, from the left side, the values of OFDM symbols are 0, 1, 2, 3... 13, respectively.

In Figs. 11(a) and 11(b), the frequency domain subbands occupied by the downlink channel of UE 1 are 0-2, and the frequency subbands occupied by the uplink channel of UE 2 are 0-3, that is, the frequency subbands occupied by UE 1 and UE 2 overlap; the OFDM symbols occupied by the downlink channel of UE 1 are 1-4, and the OFDM symbols occupied by the uplink channel of UE 2 are 1-4, that is, OFDM symbols occupied by the downlink channel of UE 1 and OFDM symbols occupied by the uplink channel of UE 2 are the same, both are OFDM symbols 1-4. Therefore, the OFDM symbols occupied by UE 1 and UE 2 overlap.

It may be seen that in Fig. 11(a) and Fig. 11(b), the resources occupied by UE 1 and UE 2 on frequency domain subbands 0-2 and OFDM symbols 1-4 overlap. In this way, uplink and downlink channel resources may be multiplexed between UEs, and the utilization rate of channel resources may be improved to the maximum extent.

Based on the above-mentioned dispatch information of the user equipment, the dynamic dispatching of the user equipment may also realize that the frequency domain subbands occupied for sending data and the frequency domain subband occupied for receiving data by the same user equipment do not overlap, and the OFDM symbol occupied for sending data and the OFDM symbol occupied for receiving data overlap; or, the frequency domain subband occupied for sending data and the frequency domain subband occupied for receiving data by the same user equipment overlap, and the OFDM symbol occupied for sending data and the OFDM symbol occupied for receiving data do not overlap.

In Fig. 11(a), the frequency domain subbands occupied by the downlink channel of UE 1 are 0-2, and the frequency domain subbands occupied by the uplink channel of UE 1 are 4-6, that is, the frequency domain subbands occupied for sending data and the frequency domain subbands occupied for receiving data by UE 1 do not overlap; the OFDM symbols occupied by the downlink channel of UE 1 are 1-4, and the OFDM symbols occupied by the uplink channel of UE 1 are 1-5, that is, the OFDM symbols occupied by the downlink channel of UE 1 and the OFDM symbols occupied by the uplink channel of UE 1 have the same symbols, such as OFDM symbols 1-4, therefore, the OFDM symbols occupied for sending data and the OFDM symbols occupied for receiving data by UE 1 overlap.

In order to further reduce the interference of the UE itself sending data and receiving data, the frequency domain subband occupied for sending data and the frequency domain subband occupied for receiving data by the same user equipment do not overlap, and the OFDM symbols occupied for sending data and the OFDM symbols occupied for receiving data do not overlap. For example, the frequency subbands occupied by the downlink channel of UE 1 are 0-2, the frequency subbands occupied by the uplink channel of UE 1 are 4-6, the OFDM symbols occupied by the downlink channel of UE 1 are 1-4, and the OFDM symbols occupied by the uplink channel of UE 1 are 5-9 and so on.

In addition, based on the above-mentioned dispatch information of the user equipment, the dynamic dispatching of the user equipment may also realize that frequency domain subbands occupied for sending data and frequency domain subbands occupied for receiving data by the same user equipment overlap, and OFDM symbols occupied for sending data and OFDM symbols occupied for receiving data overlap.

In the embodiment of the present application, if the UE needs to send and receive at the same time in the same time domain resource, the UE is required to have full-duplex function, as shown in Fig. 11(a), UE1 sends and receives at the same time in the same slot, which requires UE1 to have full-duplex function. In this way, the base station may flexibly schedule UEs to send and receive data, as long as the interference of uplink and downlink channels between the UEs is within the interference tolerance range.

In some embodiments, based on the above dispatch information of the user equipment, when the base station dynamically schedules the user equipments, it may also set the validity period of the configuration information and the cycle period of the configuration information, within the validity period of the configuration information, at least one cycle period is included, and in each of the cycle periods, the resources occupied by the full-duplex time slots at the same position are the same. The description of the validity period and cycle period of the configuration information may refer to the description about the duration of the full-duplex time slot and the cycle period of the configuration information in the above semi-static configuration section, which will not be repeated here.

In this embodiment of the present application, in order to realize the assignment of time domain resources and frequency domain resources of a full-duplex time slot, the base station may carry through the broadcast signaling of the cell, and the broadcast signaling may include the Information Element (IE) as shown in Tab. 2.

**Table 2**

| Signaling IE | Bit length | meaning |
|---|---|---|
| Indication of semi-static configuration of full-duplex time slot | 1 | 0: not adopt. |
| | | 1. adopt |
| Indication of frequency domain resource assignment | N | N is the length of frequency domain subband occupied by a full-duplex time slot. |
| Indication of the number of RBs/RBGs contained in the frequency domain subband | M | 2, 4, 8, 16, etc. |
| Indication of DL time domain resource | K | it is calculated by the formula of SLIV according to the actual distribution |
| Indication of UL time domain resource | L | it is calculated by the formula of SLIV according to the actual distribution |

In the technical solutions provided by this embodiment of the present application, assigning the DL&UL time-frequency domain resources of TDD FD by using a semi-static or dynamic resource assignment mode without affecting the current 5G HD system, in this way, the base station may schedule the same/different frequency domain resources in the same slot, and send and receive data at the same time, that is, the base station may schedule DL&UL data to be sent and received bidirectionally at the same time on the same domain resources, and the same/different UEs may send and receive data at the same time on the same time domain resources in the same slot, thus increase the cell coverage, reduce the increase in transmission delay, and increase the uplink capacity.

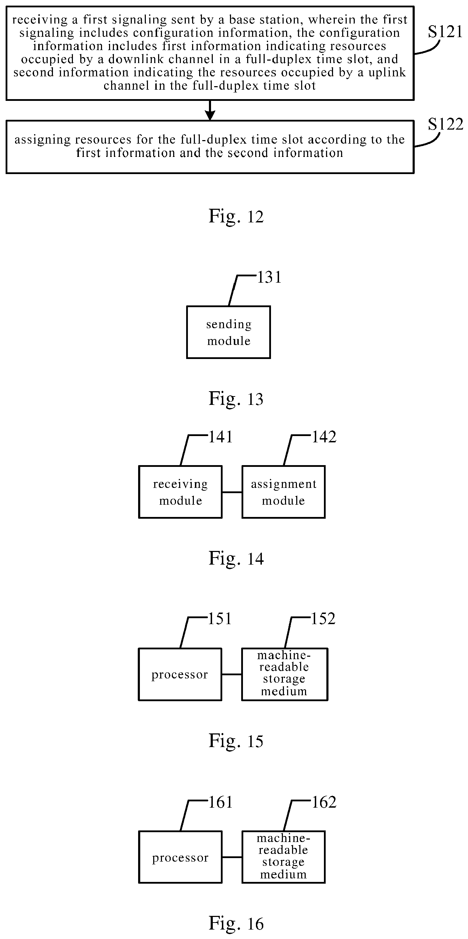

Corresponding to the above method for resource assignment applied to the base station, embodiments of the present application further provides a method for resource assignment, as shown in Fig. 12, which is applied to the UE, and the method includes the following steps:
S121, receiving a first signaling sent by a base station, wherein the first signaling includes configuration information, the configuration information includes first information indicating resources occupied by a downlink channel in a full-duplex time slot, and second information indicating the resources occupied by a uplink channel in the full-duplex time slot.
S122, assigning resources for the full-duplex time slot according to the first information and the second information.

In some embodiments, the resources may include frequency domain resources, the first information is used to indicate a frequency domain subband occupied by the downlink channel, and the second information is used to indicate a frequency domain subband occupied by the uplink channel, and the frequency domain subbands include at least one resource block or at least one resource block group; or
the first information is used to indicate a first start point and the number of resource blocks or resource block groups occupied by the downlink channel, and the second information is used to indicate a second start point and the number of resource blocks or resource block groups occupied by the uplink channel.

In some embodiments, the configuration information uses a first bitmap to represent the first information and the second information, and bits in the first bitmap correspond to frequency domain subbands one by one;
in the first bitmap, when a bit is a first preset value, it indicates that a frequency domain subband corresponding to the bit is occupied by the downlink channel, and when a bit is a second preset value, it indicates that a frequency domain subband corresponding to the bit is occupied by the uplink channel.

In some embodiments, the configuration information uses a second bitmap to represent the first information and uses a third bitmap to represent the second information, and bits in the second bitmap and the third bitmap correspond to frequency domain subbands one by one;
in the second bitmap, when a bit is a first preset value, it indicates that a frequency domain subband corresponding to the bit is occupied by the downlink channel;
in the third bitmap, when a bit is a first preset value, it indicates that a frequency domain subband corresponding to the bit is occupied by the uplink channel.

In some embodiments, the configuration information also includes the number of resource blocks included in each of the frequency domain subbands.

In some embodiments, a frame structure of the first cell is the same as that of an adjacent cell.

In some embodiments, a frame structure of the first cell is different from that of the adjacent cell; the method further comprises: communicating with the user equipment in a beam forming mode or a different frequency networking mode.

In some embodiments, the resources include time domain resources, the first information includes a first Start OFDM symbol occupied by the downlink channel and a first OFDM symbol length corresponding to the downlink channel, and the second information includes a second start OFDM symbol occupied by the uplink channel and a second OFDM symbol length corresponding to the uplink channel.

In some embodiments, the resources may include time domain resources, the first information includes a first SLIV corresponding to the downlink channel, and the second information includes a second SLIV corresponding to the uplink channel;

The first SLIV is determined according to a first Start OFDM symbol occupied by the downlink channel and a first OFDM symbol length corresponding to the downlink channel, and the second SLIV is determined according to a second start OFDM symbol occupied by the uplink channel and a second OFDM symbol length corresponding to the uplink channel.

In some embodiments, the configuration information also includes the number of full-duplex time slots included in at least one system frame.

In some embodiments, the configuration information also includes a fourth bitmap of at least one system frame, bits in the fourth bitmap correspond to time slots one by one;
in the fourth bitmap, when a bit is a third preset value, it indicates that a time slot corresponding to the bit is a full-duplex time slot;
in the fourth bitmap, when a bit is a fourth preset value, it indicates that a time slot corresponding to the bit is a half-duplex time slot.

In some embodiments, the first signaling comprises multiple sets of configuration information, and each of the sets of configuration information has one assignment sequence number; in one system frame, configuration information adopted by each full-duplex time slot is configuration information corresponding to a target assignment sequence number, and which is obtained by performing a mod operation on an index number of this full-duplex time slot and the number of multiple sets of the configuration information; or
in one system frame, configuration information adopted by each full-duplex time slot is configuration information of this full-duplex time slot specified in the first signaling; or
the first signaling further comprises a fifth bitmap, and in one system frame, the configuration information adopted by each full-duplex time slot is determined according to the fifth bitmap, and bits in the fifth bitmap correspond to time slots in the system frame one by one, and in the fifth bitmap, the time slots corresponding to the bits adopt configuration information corresponding to values of the bits.

In some embodiments, effective time of the configuration information is a third start point.

In some embodiments, the third start point is obtained by the user equipment performing a mod operation on a system frame number and duration of a full-duplex time slot, or, the third start point is preset in the user equipment and the base station.

In some embodiments, the first signaling includes the duration of the full-duplex time slot.

In some embodiments, the above method for resource assignment may further include:
when the third start point is reached, accepting, according to the resources indicated by the configuration information, a dispatch of the base station to receive and send data in the same frequency domain bandwidth.

In some embodiments, the first signaling is a broadcast signaling or a user-specific signaling.

In some embodiments, the above method for resource assignment may further include:
receiving a second signaling sent by the base station, the second signaling includes dispatch information of the full-duplex time slot of user equipment in the same frequency domain bandwidth.

In some embodiments, the second signaling includes dispatch information of at least one user equipment.

In some embodiments, for each user equipment of the above at least one user equipment:
the dispatch information of this user equipment indicates frequency domain subband occupied by the user equipment for sending data and an Orthogonal Frequency Division Multiplexing OFDM symbol occupied by the user equipment for sending data, respectively; and/or,
the dispatch information of this user equipment indicates a frequency domain subband occupied by the user equipment for receiving data and an OFDM symbol occupied by the user equipment for receiving data, respectively.

In some embodiments, frequency domain subbands occupied by different user equipments overlap, and OFDM symbols occupied by the different user equipments do not overlap; or
frequency domain subbands occupied by different user equipments do not overlap, and OFDM symbols occupied by different user equipments overlap; or
frequency domain subbands occupied by different user equipments overlap, and OFDM symbols occupied by the different user equipments overlap; or
frequency domain subbands occupied by different user equipments do not overlap, and OFDM symbols occupied by the different user equipments do not overlap; or
a frequency domain subband occupied for sending data overlaps with a frequency domain subband occupied for receiving data, and an OFDM symbol occupied for sending data overlaps with an OFDM symbol occupied for receiving data, by a same user equipment; or
a frequency domain subband occupied for sending data does not overlap with a frequency domain subband occupied for receiving data, and an OFDM symbol occupied for sending data overlaps with an OFDM symbol occupied for receiving data, by the same user equipment; or
a frequency domain subband occupied for sending data does not overlap with a frequency domain subband occupied for receiving data, and an OFDM symbol occupied for sending data does not overlap with an OFDM symbol occupied for receiving data, by the same user equipment; or
a frequency domain subband occupied for sending data overlaps with a frequency domain subband occupied for receiving data, and an OFDM symbol occupied for sending data does not overlap with an OFDM symbol occupied for receiving data, by the same user equipment.

In some embodiments, the second signaling is a downlink control indication.

In some embodiments, at least one cycle period is included within a validity period of the configuration information, and in each cycle period, resources occupied by a full-duplex time slot at a same position are the same.

In this embodiment of the present application, for a full-duplex time slot, the base station configures the first information indicating resources occupied by a downlink channel in the full-duplex time slot, and second information indicating resources occupied by a uplink channel in the full-duplex time slot. When configuring the first information and the second information, the base station can minimize the interference in the full-duplex time slot, and guarantee the communication quality. In addition, the base station and the UE adopt full-duplex time slot for communication, which is no longer limited by the less deployment of uplink time slots in the half-duplex mode, which increasing the coverage of the cell, improving the uplink transmission rate and reducing the uplink transmission delay.

Corresponding to the above method for resource assignment applied to the base station, an embodiment of the present application also provides a device for resource assignment, as shown in Fig. 13, which is applied to a base station, and the device includes:
a sending module 131, configured to send a first signaling to a user equipment in a first cell when the base station is provided with configuration information of a full-duplex time slot in a same frequency domain bandwidth of the first cell, wherein the first signaling includes the configuration information, wherein the configuration information includes first information indicating resources occupied by a downlink channel in the full-duplex time slot, and second information indicating resources occupied by a uplink channel in the full-duplex time slot.

In some embodiments, the resources include frequency domain resources, the first information is used to indicate a frequency domain subband occupied by the downlink channel, and the second information is used to indicate a frequency domain subband occupied by the uplink channel, and the frequency domain subband includes at least one resource block or at least one resource block group; or
the first information is used to indicate a first start point and the number of resource blocks or resource block groups occupied by the downlink channel, and the second information is used to indicate a second start point and the number of resource blocks or resource block groups occupied by the uplink channel.

In some embodiments, the configuration information uses a first bitmap to represent the first information and the second information, and bits in the first bitmap correspond to the frequency domain subbands one by one;
in the first bitmap, when a bit is a first preset value, it indicates that a frequency domain subband corresponding to the bit is occupied by the downlink channel, and when a bit is a second preset value, it indicates that a frequency domain subband corresponding to the bit is occupied by the uplink channel.

In some embodiments, the configuration information uses a second bitmap to represent the first information and uses a third bitmap to represent the second information, and the bits in the second bitmap and the third bitmap correspond to the frequency domain subbands one by one;
in the second bitmap, when a bit is a first preset value, it indicates that a frequency domain subband corresponding to the bit is occupied by the downlink channel;
in the third bitmap, when a bit is a first preset value, it indicates that a frequency domain subband corresponding to the bit is occupied by the uplink channel.

In some embodiments, the configuration information also includes the number of resource blocks included in each of the frequency domain subbands.

In some embodiments, a frame structure of the first cell is the same as that of an adjacent cell.

In some embodiments, a frame structure of the first cell is different from that of the adjacent cell; the above method may also include:
a communication module, to communicate with the user equipment in a beam forming mode or a different frequency networking mode.

In some embodiments, the adjacent cell is an area covered by the base station, and the device for resource assignment may further include:
a first adjusting module, to adjust the frame structures of the first cell and the adjacent cell so that the frame structures of the first cell and the adjacent cell are the same or different.

In some embodiments, the adjacent cell is an area covered by a further base station, and the above device for resource assignment may further include:
a second adjustment module, to receive a message sent by the other base station, wherein the message indicates the frame structure of the adjacent cell; to adjust the frame structure of the first cell according to the message, so that the frame structures of the first cell and the adjacent cell are the same or different.

In some embodiments, the resources include time domain resources, the first information includes a first Start Orthogonal Frequency Division Multiplexing OFDM symbol occupied by the downlink channel and a first OFDM symbol length corresponding to the downlink channel, and the second information includes a second start OFDM symbol occupied by the uplink channel and a second OFDM symbol length corresponding to the uplink channel.

In some embodiments, the resources include time domain resources, the first information includes a first SLIV corresponding to the downlink channel, and the second information includes a second SLIV corresponding to the uplink channel;
the first SLIV is determined according to a first Start OFDM symbol occupied by the downlink channel and a first OFDM symbol length corresponding to the downlink channel, and the second SLIV is determined according to a second start OFDM symbol occupied by the uplink channel and a second OFDM symbol length corresponding to the uplink channel.

In some embodiments, the above-mentioned device for resource assignment may further include a determination unit, is to
when the base station is configured with the first start OFDM symbol and the first OFDM symbol length, determine first information according to the configured first start OFDM symbol and the first OFDM symbol length; when the base station is not configured with the first start OFDM symbol and the first OFDM symbol length, assign a start OFDM symbol of the full-duplex time slot as the first start OFDM symbol, and assign a OFDM symbol length of the full-duplex time slot as the first OFDM symbol length, and determine the first information according to the assigned first start OFDM symbol and the first OFDM symbol length; and/or
when the base station is configured with the second start OFDM symbol and the second OFDM symbol length, determine the second information according to the configured second start OFDM symbol and the second OFDM symbol length; when the base station is not configured with the second start OFDM symbol and the second OFDM symbol length, assign a start OFDM symbol of the full-duplex time slot as the second start OFDM symbol, assign an OFDM symbol length of the full-duplex time slot as the second OFDM symbol length, and determine the second information according to the assigned second start OFDM symbol and the second OFDM symbol length.

In some embodiments, in the full-duplex time slot, the OFDM symbol lengths occupied by the downlink channel and the uplink channel are the same as the OFDM symbol length of the full-duplex time slot.

In some embodiments, the configuration information also includes the number of full-duplex time slots included in at least one system frame.

In some embodiments, the configuration information also includes a fourth bitmap of at least one system frame, and bits in the fourth bitmap correspond to time slots one by one;
in the fourth bitmap, when a bit is a third preset value, it indicates that a time slot corresponding to the bit is a full-duplex time slot;
in the fourth bitmap, when a bit is a fourth preset value, it indicates that a time slot corresponding to the bit is a half-duplex time slot.

In some embodiments, the base station is provided with multiple sets of configuration information, and each of the sets of the configuration information has one assignment sequence number; in one system frame, configuration information adopted by each full-duplex time slot is configuration information corresponding to a target assignment sequence number, which is obtained by performing a mod operation on an index number of this full-duplex time slot and the number of the multiple sets of the configuration information; or
in one system frame, configuration information adopted by each full-duplex time slot is configuration information of this full-duplex time slot specified in the first signaling; or
the first signaling further comprises a fifth bitmap, and in one system frame, the configuration information adopted by each full-duplex time slot is determined according to the fifth bitmap, and bits in the fifth bitmap correspond to time slots in the system frame one by one, and in the fifth bitmap, the time slots corresponding to the bits adopt configuration information corresponding to values of the bits.

In some embodiments, effective time of the configuration information is a third start point.

In some embodiments, the third start point is obtained by the base station performing a mod operation on a system frame number and duration of a full-duplex time slot, or, the third start point is preset in the user equipment and the base station.

In some embodiments, the first signaling includes the duration of the full-duplex time slot.

In some embodiments, the above device for resource assignment may further include:
a dispatch module, is to dispatch the user equipment to receive and send data in the same frequency domain bandwidth according to the resources indicated by the configuration information when the third start point is reached.

In some embodiments, the first signaling is a broadcast signaling or a user-specific signaling.

In some embodiments, the sending module may also be configured to:
send a second signaling to the user equipment when the base station is not provided with the configuration information, wherein the second signaling comprises dispatch information of the full-duplex time slot of the user equipment in the same frequency domain bandwidth.

In some embodiments, the second signaling includes dispatch information of at least one user equipment.

In some embodiments, for each user equipment of the above at least one user equipment,
the dispatch information of this user equipment indicates frequency domain subband occupied by the user equipment for sending data and an OFDM symbol occupied by the user equipment for sending data, respectively; and/or,
the dispatch information of this user equipment indicates a frequency domain subband occupied by the user equipment for receiving data and an OFDM symbol occupied by the user equipment for receiving data, respectively.

In some embodiments, frequency domain subbands occupied by different user equipments overlap, and OFDM symbols occupied by the different user equipments do not overlap; or
frequency domain subbands occupied by different user equipments do not overlap, and OFDM symbols occupied by the different user equipments overlap; or
frequency domain subbands occupied by different user equipments overlap, and OFDM symbols occupied by the different user equipments overlap; or
frequency domain subbands occupied by different user equipments do not overlap, and OFDM symbols occupied by the different user equipments do not overlap; or
a frequency domain subband occupied for sending data overlaps with a frequency domain subband occupied for receiving data, and an OFDM symbol occupied for sending data overlaps with an OFDM symbol occupied for receiving data, by a same user equipment; or
a frequency domain subband occupied for sending data does not overlap with a frequency domain subband occupied for receiving data, and an OFDM symbol occupied for sending data overlaps with an OFDM symbol occupied for receiving data, by the same user equipment; or
a frequency domain subband occupied for sending data does not overlap with a frequency domain subband occupied for receiving data, and an OFDM symbol occupied for sending data does not overlap with an OFDM symbol occupied for receiving data, by the same user equipment; or
a frequency domain subband occupied for sending data overlaps with a frequency domain subband occupied for receiving data, and an OFDM symbol occupied for sending data does not overlap with an OFDM symbol occupied for receiving data, by the same user equipment.

In some embodiments, the second signaling is a downlink control indication.

In some embodiments, at least one cycle period is included within a validity period of the configuration information, and in each cycle period, resources occupied by a full-duplex time slot at a same position are the same.

In this embodiment of the present application, for a full-duplex time slot, the base station configures the first information indicating resources occupied by a downlink channel in the full-duplex time slot, and second information indicating resources occupied by a uplink channel in the full-duplex time slot. When configuring the first information and the second information, the base station can minimize the interference in the full-duplex time slot, and guarantee the communication quality. In addition, the base station and the UE adopt full-duplex time slot for communication, which is no longer limited by the less deployment of uplink time slots in the half-duplex mode, which increasing the coverage of the cell, improving the uplink transmission rate and reducing the uplink transmission delay.
Corresponding to the above method for resource assignment applied to the UE, an embodiment of the present application also provides a device for resource assignment, as shown in Fig. 14, which is applied to the UE, and the device includes:
a receiving module 141, to receive a first signaling sent by a base station, wherein the first signaling includes configuration information, and the configuration information includes first information indicating resources occupied by a downlink channel in a full-duplex time slot in a same frequency domain bandwidth of a first cell, and second information indicating resources occupied by an uplink channel in the full-duplex time slot;
an assignment module 142, to assign resources for the full-duplex time slot according to the first information and the second information.

In some embodiments, the resources include frequency domain resources, the first information is used to indicate frequency domain subband occupied by the downlink channel, and the second information is used to indicate frequency domain subband occupied by the uplink channel, and the frequency domain subbands includes at least one resource block or at least one resource block group; or
the first information is used to indicate a first start point and the number of resource blocks or resource block groups occupied by the downlink channel, and the second information is used to indicate a second start point and the number of resource blocks or resource block groups occupied by the uplink channel.

In some embodiments, the configuration information uses a first bitmap to represent the first information and the second information, and bits in the first bitmap correspond to the frequency domain subbands one by one;
in the first bitmap, when a bit is a first preset value, it indicates that a frequency domain subband corresponding to the bit is occupied by the downlink channel, and when a bit is a second preset value, it indicates that a frequency domain subband corresponding to the bit is occupied by the uplink channel.

In some embodiments, the configuration information uses a second bitmap to represent the first information and uses a third bitmap to represent the second information, and the bits in the second bitmap and the third bitmap correspond to the frequency domain subbands one by one;
in the second bitmap, when a bit is a first preset value, it indicates that a frequency domain subband corresponding to the bit is occupied by the downlink channel;
in the third bitmap, when a bit is a first preset value, it indicates that a frequency domain subband corresponding to the bit is occupied by the uplink channel.

In some embodiments, the configuration information also includes the number of resource blocks included in each of the frequency domain subbands.

In some embodiments, a frame structure of the first cell is the same as that of an adjacent cell.

In some embodiments, a frame structure of the first cell is different from that of the adjacent cell; the above device for resource assignment may also include:
a communication module, to communicate with the base station in a beam forming mode or a different frequency networking mode.

In some embodiments, the resources include time domain resources, the first information includes a first start OFDM symbol occupied by the downlink channel and the first OFDM symbol length corresponding to the downlink channel, and the second information includes a second start OFDM symbol occupied by the uplink channel and the second OFDM symbol length corresponding to the uplink channel.

In some embodiments, the resources include time domain resources, the first information includes a first SLIV corresponding to the downlink channel, and the second information includes a second SLIV corresponding to the uplink channel;
the first SLIV is determined according to a first Start OFDM symbol occupied by the downlink channel and a first OFDM symbol length corresponding to the downlink channel, and the second SLIV is determined according to a second start OFDM symbol occupied by the uplink channel and a second OFDM symbol length corresponding to the uplink channel.

In some embodiments, the configuration information also includes the number of full-duplex time slots included in at least one system frame.

In some embodiments, the configuration information also includes a fourth bitmap of at least one system frame, bits in the fourth bitmap correspond to time slots one by one;
in the fourth bitmap, when a bit is a third preset value, it indicates that a time slot corresponding to the bit is a full-duplex time slot;
in the fourth bitmap, when a bit is a fourth preset value, it indicates that a time slot corresponding to the bit is a half-duplex time slot.

In some embodiments, the first signaling comprises multiple sets of configuration information, and each of the sets of configuration information has one assignment sequence number; in one system frame, the configuration information adopted by each full-duplex time slot is configuration information corresponding to a target assignment sequence number, which is obtained by performing a mod operation on an index number of this full-duplex time slot and the number of multiple sets of the configuration information; or
in one system frame, configuration information adopted by each full-duplex time slots is configuration information of this full-duplex time slot specified in the first signaling; or
the first signaling further comprises a fifth bitmap, and in one system frame, the configuration information adopted by each full-duplex time slot is determined according to the fifth bitmap, and bits in the fifth bitmap correspond to time slots in the system frame one by one, and in the fifth bitmap, the time slots corresponding to the bits adopt configuration information corresponding to values of the bits.

In some embodiments, effective time of the configuration information is a third start point.

In some embodiments, the third start point is obtained by the user equipment performing a mod operation on a system frame number and duration of a full-duplex time slot, or, the third start point is preset in the user equipment and the base station.

In some embodiments, the first signaling includes the duration of the full-duplex time slot.

In some embodiments, the above device for resource assignment may further include:
a dispatch module, to accept, according to the resources indicated by the configuration information, a dispatch of the base station to receive and send data in the same frequency domain bandwidth when the third start point is reached.

In some embodiments, the first signaling is a broadcast signaling or a user-specific signaling.

In some embodiments, the receiving module is further to:
receive a second signaling sent by the base station, wherein the second signaling comprises dispatch information of the full-duplex time slot of the user equipment in the same frequency domain bandwidth.

In some embodiments, the second signaling includes dispatch information of at least one user equipment.

In some embodiments, for each user equipment of the at least one user equipment:
the dispatch information of the user equipment indicates the frequency domain subband occupied by the user equipment for sending data and an OFDM symbol occupied by the user equipment for sending data, respectively; and /or,
the dispatch information of this user equipment indicates a frequency domain subband occupied by the user equipment for receiving data and an OFDM symbol occupied by the user equipment for receiving data, respectively.

In some embodiments, frequency domain subbands occupied by different user equipments overlap, and OFDM symbols occupied by different user equipments do not overlap; or
frequency domain subbands occupied by different user equipments do not overlap, and OFDM symbols occupied by different user equipments overlap; or
frequency domain subbands occupied by different user equipments overlap, and OFDM symbols occupied by different user equipments overlap; or
frequency domain subbands occupied by different user equipments do not overlap, and OFDM symbols occupied by different user equipments do not overlap; or
a frequency domain subband occupied for sending data overlaps with a frequency domain subband occupied for receiving data, and an OFDM symbol occupied for sending data overlaps with an OFDM symbol occupied for receiving data, by a same user equipment; or
a frequency domain subband occupied for sending data does not overlap with a frequency domain subband occupied for receiving data, and an OFDM symbol occupied for sending data overlaps with an OFDM symbol occupied for receiving data, by the same user equipment; or
a frequency domain subband occupied for sending data does not overlap with a frequency domain subband occupied for receiving data, and an OFDM symbol occupied for sending data does not overlap with an OFDM symbol occupied for receiving data, by the same user equipment; or
a frequency domain subband occupied for sending data overlaps with a frequency domain subband occupied for receiving data, and an OFDM symbol occupied for sending data does not overlap with an OFDM symbol occupied for receiving data, by the same user equipment.

In some embodiments, the second signaling is a downlink control indication.

In some embodiments, at least one cycle period is included within a validity period of the configuration information, and in each cycle period, resources occupied by a full-duplex time slot at a same position are the same.

In this embodiment of the present application, for a full-duplex time slot, the base station configures the first information indicating resources occupied by a downlink channel in the full-duplex time slot, and second information indicating resources occupied by a uplink channel in the full-duplex time slot. When configuring the first information and the second information, the base station can minimize the interference in the full-duplex time slot, and guarantee the communication quality. In addition, the base station and the UE adopt full-duplex time slot for communication, which is no longer limited by the less deployment of uplink time slots in the half-duplex mode, which increasing the coverage of the cell, improving the uplink transmission rate and reducing the uplink transmission delay.
Corresponding to the above method for resource assignment applied to the base station, an embodiment of the present application also provides a base station, as shown in Fig. 15, which includes a processor 151 and a machine-readable storage medium 152, and machine-executable instructions that can be executed by the processor 151 are stored in the machine-readable storage medium 152, which, when executed by the processor, cause the processor 151 to perform steps of any of the method for resource assignment applied to the base station.

Corresponding to the above method for resource assignment applied to the UE, an embodiment of the present application also provides an UE, as shown in FIG. 16, which includes a processor 161 and a machine-readable storage medium 162, and machine-executable instructions that can be executed by the processor 161 are stored in the machine-readable storage medium 162, which, when executed by the processor, cause the processor 161 to perform steps of any of the method for resource assignment applied to the UE.

Corresponding to the above method for resource assignment applied to the base station, an embodiment of the present application also provides a machine-readable storage medium, wherein machine-executable instructions that can be executed by a processor are stored in the machine-readable storage medium, which, when executed by the processor, cause the processor to perform steps of any of the above method for resource assignment steps applied to the base station.

Corresponding to the above method for resource assignment applied to the UE, an embodiment of the present application also provides a machine-readable storage medium, wherein machine-executable instructions that can be executed by a processor are stored in the machine-readable storage medium, which, when executed by the processor, cause the processor to perform steps of any of the above method for resource assignment steps applied to the UE.

Corresponding to the above method for resource assignment applied to the base station, an embodiment of the present application also provides a computer program product, which prompts the processor to implement any of the above method for resource assignment steps applied to the base station.

Corresponding to the above method for resource assignment applied to the UE, a computer program product, which prompts the processor to implement any of the above method for resource assignment steps applied to the UE.

The above machine-readable storage medium may include Random Access Memory (RAM) or Non-Volatile Memory (NVM), such as at least one disk memory. In addition, the machine-readable storage medium may also be at least one storage device located far away from the above processor.

The processor may be a general-purpose processor, including a Central Processing Unit (CPU), a Network Processor (NP), etc.; it may also be a Digital Signal Processing (DSP), an Application Specific Integrated Circuit (ASIC), a Field-Programmable Gate Array (FPGA) or other programmable logic devices, discrete gate or transistor logic devices, and discrete hardware components.

It should be noted that in this document, relational terms such as first and second are only used to distinguish one entity or operation from another entity or operation, and do not necessarily require or imply any such actual relationship or sequence between these entities or operations. Moreover, terms "comprising", "including" or any other variation thereof is intended to cover a non-exclusive inclusion, so that a process, method, article or equipment that includes a series of elements includes not only those elements, but also other elements not explicitly listed, or further includes elements inherent to such process, method, article or equipment. Without further restrictions, an element defined by the statement " comprising a ..." does not exclude the existence of additional identical elements in a process, method, article or equipment that includes said element.

Each of the embodiments in this specification are described in relevant ways, and the same and similar parts of each of the embodiments may be referred to each other, and each embodiment focuses on the differences from other embodiments. In particular, the description, for the embodiments of the device, the base station, the UE, the machine-readable storage medium and the computer program product, is relatively simple, since they are basically similar to the method embodiment, and for relevant details, please refer to the partial descriptions of the method embodiments.

The above descriptions are only preferred embodiments of the present application, and are not intended to limit the scope of protection of the present application. Any modification, equivalent substitution, improvement, etc. made within the spirit and principle of the present application are included in the protection scope of the present application.

The above are only preferred embodiments of the present application, and are not intended to limit the present application, any modifications, equivalent replacements, improvements, etc. made within the spirit and principles of the present application shall be included in the scope of protection of the present application.

## Claims

1. A method for resource assignment, which is applied to a base station, comprising:
sending a first signaling to a user equipment in a first cell when the base station is provided with configuration information of a full-duplex time slot in a same frequency domain bandwidth of the first cell, wherein the first signaling includes the configuration information, wherein the configuration information includes first information indicating resources occupied by a downlink channel in the full-duplex time slot, and second information indicating resources occupied by a uplink channel in the full-duplex time slot.

2. The method according to claim 1, wherein the resources include frequency domain resources, the first information is used to indicate a frequency domain subband occupied by the downlink channel, and the second information is used to indicate a frequency domain subband occupied by the uplink channel, and the frequency domain subbands include at least one resource block or at least one resource block group; or
the first information is used to indicate a first start point and the number of resource blocks or resource block groups occupied by the downlink channel, and the second information is used to indicate a second start point and the number of resource blocks or resource block groups occupied by the uplink channel.

3. The method according to claim 2, wherein the configuration information uses a first bitmap to represent the first information and the second information, and bits in the first bitmap correspond to the frequency domain subbands one by one;
in the first bitmap, when a value of a bit is a first preset value, it indicates that a frequency domain subband corresponding to the bit is occupied by the downlink channel, and when a value of a bit is a second preset value, it indicates that a frequency domain subband corresponding to the bit is occupied by the uplink channel.

4. The method according to claim 2, wherein the configuration information uses a second bitmap to represent the first information, and uses a third bitmap to represent the second information, and bits in the second bitmap and the third bitmap correspond to the frequency domain subbands one by one;
in the second bitmap, when a value of a bit is a first preset value, it indicates that a frequency domain subband corresponding to the bit is occupied by the downlink channel;
in the third bitmap, when a value of a bit is a first preset value, it indicates that a frequency domain subband corresponding to the bit is occupied by the uplink channel.

5. The method according to any one of claims 2 to 4, wherein the configuration information further comprises the number of resource blocks included in each of the frequency domain subbands.

6. The method according to any one of claims 2 to 4, wherein a frame structure of the first cell is the same as that of an adjacent cell; or
a frame structure of the first cell is different from that of the adjacent cell; the method further comprises: communicating with the user equipment in a beam forming mode or a different frequency networking mode.

7. The method according to claim 6, wherein the adjacent cell is an area covered by the base station, and the method further comprises:
adjusting the frame structures of the first cell and the adjacent cell so that the frame structures of the first cell and the adjacent cell are the same or different.

8. The method according to claim 6, wherein the adjacent cell is an area covered by a further base station, and the method further comprises:
receiving a message sent by the further base station, wherein the message indicates the frame structure of the adjacent cell;
adjusting the frame structure of the first cell according to the message, so that the frame structures of the first cell and the adjacent cell are the same or different.

9. The method according to claim 1, wherein the resources include time domain resources, the first information includes a first Start Orthogonal Frequency Division Multiplexing OFDM symbol occupied by the downlink channel and a first OFDM symbol length corresponding to the downlink channel, and the second information includes a second start OFDM symbol occupied by the uplink channel and a second OFDM symbol length corresponding to the uplink channel.

10. The method according to claim 1, wherein the resources include time domain resources, the first information includes a first Start Length Indication Value SLIV corresponding to the downlink channel, and the second information includes a second SLIV corresponding to the uplink channel;
the first SLIV is determined according to a first Start Orthogonal Frequency Division Multiplexing OFDM symbol occupied by the downlink channel and a first OFDM symbol length corresponding to the downlink channel, and the second SLIV is determined according to a second start OFDM symbol occupied by the uplink channel and a second OFDM symbol length corresponding to the uplink channel.

11. The method according to claim 9 or 10, wherein the method further comprises:
when the base station is configured with the first start OFDM symbol and the first OFDM symbol length, determining the first information according to the configured first start OFDM symbol and the first OFDM symbol length; when the base station is not configured with the first start OFDM symbol and the first OFDM symbol length, assigning a start OFDM symbol of the full-duplex time slot as the first start OFDM symbol, and assigning an OFDM symbol length of the full-duplex time slot as the first OFDM symbol length, and determining the first information according to the assigned first start OFDM symbol and the first OFDM symbol length; and/or
when the base station is configured with the second start OFDM symbol and the second OFDM symbol length, determining the second information according to the configured second start OFDM symbol and the second OFDM symbol length; when the base station is not configured with the second start OFDM symbol and the second OFDM symbol length, assigning a start OFDM symbol of the full-duplex time slot as the second start OFDM symbol, assigning an OFDM symbol length of the full-duplex time slot as the second OFDM symbol length, and determining the second information according to the assigned second start OFDM symbol and the second OFDM symbol length.

12. The method according to claim 9 or 10, wherein in the full-duplex time slot, the OFDM symbol lengths occupied by the downlink channel and the uplink channel are the same as the OFDM symbol length of the full-duplex time slot.

13. The method according to claim 1, wherein the configuration information further comprises the number of full-duplex time slots included in at least one system frame.

14. The method according to claim 1, wherein the configuration information further comprises a fourth bitmap of at least one system frame, and bits in the fourth bitmap correspond to time slots one by one;
in the fourth bitmap, when a bit is a third preset value, it indicates that a time slot corresponding to the bit is a full-duplex time slot;
in the fourth bitmap, when a bit is a fourth preset value, it indicates that a time slot corresponding to the bit is a half-duplex time slot.

15. The method according to claim 14, wherein the base station is provided with multiple sets of configuration information, and each of the sets of configuration information has one assignment sequence number; in one system frame, configuration information adopted by each full-duplex time slot is configuration information corresponding to a target assignment sequence number, which is obtained by performing a mod operation on an index number of this full-duplex time slot and the number of the multiple sets of configuration information; or
in one system frame, configuration information adopted by each full-duplex time slot is configuration information of this full-duplex time slot specified in the first signaling; or
the first signaling further comprises a fifth bitmap; in one system frame, configuration information adopted by each full-duplex time slot is determined according to the fifth bitmap; bits in the fifth bitmap correspond to time slots in the system frame one by one; and in the fifth bitmap, the time slots corresponding to the bits adopt configuration information corresponding to values of the bits.

16. The method according to claim 1, wherein effective time of the configuration information is a third start point.

17. The method according to claim 16, wherein the third start point is obtained by performing, by the base station, a mod operation on a system frame number and duration of a full-duplex time slot, or, the third start point is preset in the user equipment and the base station.

18. The method according to claim 17, wherein the first signaling comprises the duration.

19. The method according to any one of claims 16 to 18, wherein the method further comprises:
when the third start point is reached, dispatching the user equipment to receive and send data in the same frequency domain bandwidth according to resources indicated by the configuration information.

20. The method according to any one of claims 1-4, 9-10 and 13-18, wherein the first signaling is a broadcast signaling or a user-specific signaling.

21. The method according to claim 1, wherein the method further comprises:
sending a second signaling to the user equipment when the base station is not provided with the configuration information, wherein the second signaling comprises dispatch information of the full-duplex time slot of the user equipment in the same frequency domain bandwidth.

22. The method according to claim 21, wherein the second signaling comprises dispatch information of at least one user equipment.

23. The method according to claim 22, wherein, for each user equipment of the at least one user equipment, the dispatch information of this user equipment indicates a frequency domain subband occupied by the user equipment for sending data and an Orthogonal Frequency Division Multiplexing OFDM symbol occupied by the user equipment for sending data; and/or,
the dispatch information of this user equipment indicates a frequency domain subband occupied by the user equipment for receiving data and an OFDM symbol occupied by the user equipment for receiving data.

24. The method according to claim 23, wherein frequency domain subbands occupied by different user equipments overlap, and OFDM symbols occupied by the different user equipments do not overlap; or
frequency domain subbands occupied by different user equipments do not overlap, and OFDM symbols occupied by the different user equipments overlap; or
frequency domain subbands occupied by different user equipments overlap, and OFDM symbols occupied by the different user equipments overlap; or
frequency domain subbands occupied by different user equipments do not overlap, and OFDM symbols occupied by different user equipments do not overlap; or
a frequency domain subband occupied for sending data overlaps with a frequency domain subband occupied for receiving data by a same user equipment, and an OFDM symbol occupied for sending data overlaps with an OFDM symbol occupied for receiving data, by the same user equipment; or
a frequency domain subband occupied for sending data does not overlap with a frequency domain subband occupied for receiving data by a same user equipment, and an OFDM symbol occupied for sending data overlaps with an OFDM symbol occupied for receiving data by the same user equipment; or
a frequency domain subband occupied for sending data does not overlap with a frequency domain subband occupied for receiving data by a same user equipment, and an OFDM symbol occupied for sending data does not overlap with an OFDM symbol occupied for receiving data, by the same user equipment; or
a frequency domain subband occupied for sending data overlaps with a frequency domain subband occupied for receiving data by a same user equipment, and an OFDM symbol occupied for sending data does not overlap with an OFDM symbol occupied for receiving data, by the same user equipment.

25. The method according to any one of claims 21 to 24, wherein the second signaling is a downlink control indication.

26. The method according to any one of claims 1-4, 9-10, 13-18 and 21-24, wherein at least one cycle period is included within a validity period of the configuration information, and in each of at least one cycle period, resources occupied by a full-duplex time slot at a same position are the same.

27. A method for resource assignment, which is applied to a user equipment, comprising:
receiving a first signaling sent by a base station, wherein the first signaling includes configuration information, and the configuration information includes first information indicating resources occupied by a downlink channel in a full-duplex time slot in a same frequency domain bandwidth of a first cell, and second information indicating resources occupied by an uplink channel in the full-duplex time slot;
assigning resources for the full-duplex time slot according to the first information and the second information.

28. The method according to claim 27, wherein the resources include frequency domain resources, the first information is used to indicate a frequency domain subband occupied by the downlink channel, and the second information is used to indicate a frequency domain subband occupied by the uplink channel, and the frequency domain subbands include at least one resource block or at least one resource block group; or
the first information is used to indicate a first start point and the number of resource blocks or resource block groups occupied by the downlink channel, and the second information is used to indicate a second start point and the number of resource blocks or resource block groups occupied by the uplink channel.

29. The method according to claim 28, wherein the configuration information uses a first bitmap to represent the first information and the second information, and bits in the first bitmap correspond to frequency domain subbands one by one;
in the first bitmap, when a bit is a first preset value, it indicates that a frequency domain subband corresponding to the bit is occupied by the downlink channel, and when a bit is a second preset value, it indicates that a frequency domain subband corresponding to the bit is occupied by the uplink channel.

30. The method according to claim 28, wherein the configuration information uses a second bitmap to represent the first information and uses a third bitmap to represent the second information, and bits in the second bitmap and the third bitmap correspond to frequency domain subbands one by one;
in the second bitmap, when a bit is a first preset value, it indicates that a frequency domain subband corresponding to the bit is occupied by the downlink channel;
in the third bitmap, when a bit is a first preset value, it indicates that a frequency domain subband corresponding to the bit is occupied by the uplink channel.

31. The method according to any one of claims 28 to 30, wherein the configuration information further comprises the number of resource blocks included in each of the frequency domain subbands.

32. The method according to any one of claims 28 to 30, wherein a frame structure of the first cell is the same as that of an adjacent cell; or
a frame structure of the first cell is different from that of the adjacent cell; the method further comprises: communicating with the base station in a beam forming mode or a different frequency networking mode.

33. The method according to claim 27, wherein the resources include time domain resources, the first information includes a first Start Orthogonal Frequency Division Multiplexing OFDM symbol occupied by the downlink channel and a first OFDM symbol length corresponding to the downlink channel, and the second information includes a second start OFDM symbol occupied by the uplink channel and a second OFDM symbol length corresponding to the uplink channel.

34. The method according to claim 27, wherein the resources include time domain resources, the first information includes a first Start Length Indication Value SLIV corresponding to the downlink channel, and the second information includes a second SLIV corresponding to the uplink channel;
the first SLIV is determined according to a first Start Orthogonal Frequency Division Multiplexing OFDM symbol occupied by the downlink channel and a first OFDM symbol length corresponding to the downlink channel, and the second SLIV is determined according to a second start OFDM symbol occupied by the uplink channel and a second OFDM symbol length corresponding to the uplink channel.

35. The method according to claim 27, wherein the configuration information further comprises a number of full-duplex time slots included in at least one system frame.

36. The method according to claim 27, wherein the configuration information further comprises a fourth bitmap of at least one system frame, bits in the fourth bitmap correspond to time slots one by one;
in the fourth bitmap, when a bit is a third preset value, it indicates that a time slot corresponding to the bit is a full-duplex time slot;
in the fourth bitmap, when a bit is a fourth preset value, it indicates that a time slot corresponding to the bit is a half-duplex time slot.

37. The method according to claim 36, wherein the first signaling comprises multiple sets of configuration information, and each of the sets of configuration information has one assignment sequence number; in one system frame, configuration information adopted by each full-duplex time slot is configuration information corresponding to a target assignment sequence number, which is obtained by performing a mod operation on an index number of this full-duplex time slot and the number of the multiple sets of configuration information; or
in one system frame, configuration information adopted by each full-duplex time slot is configuration information of this full-duplex time slot specified in the first signaling; or
the first signaling further comprises a fifth bitmap; in one system frame, the configuration information adopted by each full-duplex time slot is determined according to the fifth bitmap, and bits in the fifth bitmap correspond to time slots in the system frame one by one; and in the fifth bitmap, the time slots corresponding to the bits adopt configuration information corresponding to values of the bits.

38. The method according to claim 27, wherein effective time of the configuration information is a third start point.

39. The method according to claim 38, wherein the third start point is obtained by performing, by the user equipment, a mod operation on a system frame number and a duration of a full-duplex time slot, or, the third start point is preset in the user equipment and the base station.

40. The method according to claim 39, wherein the first signaling comprises the duration.

41. The method according to any one of claims 38-40, wherein the method further comprises:
when the third start point is reached, accepting, according to the resources indicated by the configuration information, a dispatch from the base station to receive and send data in the same frequency domain bandwidth.

42. The method according to any one of claims 27-30 and 33-40, wherein the first signaling is a broadcast signaling or a user-specific signaling.

43. The method according to claim 27, wherein the method further comprises:
receiving a second signaling sent by the base station, wherein the second signaling comprises dispatch information of the full-duplex time slot of the user equipment in the same frequency domain bandwidth.

44. The method according to claim 43, wherein the second signaling comprises dispatch information of at least one user equipment.

45. The method according to claim 44, wherein, for each user equipment of the at least one user equipment,
the dispatch information of this user equipment indicates a frequency domain subband occupied by the user equipment for sending data and an Orthogonal Frequency Division Multiplexing OFDM symbol occupied by the user equipment for sending data, respectively; and/or,
the dispatch information of this user equipment indicates a frequency domain subband occupied by the user equipment for receiving data and an OFDM symbol occupied by the user equipment for receiving data, respectively.

46. The method according to claim 45, wherein frequency domain subbands occupied by different user equipments overlap, and OFDM symbols occupied by the different user equipments do not overlap; or
frequency domain subbands occupied by different user equipments do not overlap, and OFDM symbols occupied by the different user equipments overlap; or
frequency domain subbands occupied by different user equipments overlap, and OFDM symbols occupied by the different user equipments overlap; or
frequency domain subbands occupied by different user equipments do not overlap, and OFDM symbols occupied by the different user equipments do not overlap; or
a frequency domain subband occupied for sending data overlaps with a frequency domain subband occupied for receiving data by a same user equipment, and an OFDM symbol occupied for sending data overlaps with an OFDM symbol occupied for receiving data, by a same user equipment; or
a frequency domain subband occupied for sending data does not overlap with a frequency domain subband occupied for receiving data by a same user equipment, and an OFDM symbol occupied for sending data overlaps with an OFDM symbol occupied for receiving data, by the same user equipment; or
a frequency domain subband occupied for sending data does not overlap with a frequency domain subband occupied for receiving data by a same user equipment, and an OFDM symbol occupied for sending data does not overlap with an OFDM symbol occupied for receiving data, by the same user equipment; or
a frequency domain subband occupied for sending data overlaps with a frequency domain subband occupied for receiving data by a same user equipment, and an OFDM symbol occupied for sending data does not overlap with an OFDM symbol occupied for receiving data, by the same user equipment.

47. The method according to any one of claims 43-46, wherein the second signaling is a downlink control indication.

48. The method according to any one of claims 27-30, 33-40 and 43-46, wherein at least one cycle period is included within a validity period of the configuration information, and in each of the at least one cycle period, resources occupied by a full-duplex time slot at a same position are the same.

49. A device for resource assignment, which is applied to a base station, the device comprising:
a sending module, configured to send a first signaling to a user equipment in a first cell when the base station is provided with configuration information of a full-duplex time slot in a same frequency domain bandwidth of the first cell, wherein the first signaling includes the configuration information, wherein the configuration information includes first information indicating resources occupied by a downlink channel in the full-duplex time slot, and second information indicating resources occupied by a uplink channel in the full-duplex time slot.

50. The device according to claim 49, wherein the resources include frequency domain resources, the first information is used to indicate a frequency domain subband occupied by the downlink channel, and the second information is used to indicate a frequency domain subband occupied by the uplink channel, and the frequency domain subband includes at least one resource block or at least one resource block group; or
the first information is used to indicate a first start point and the number of resource blocks or resource block groups occupied by the downlink channel, and the second information is used to indicate a second start point and the number of resource blocks or resource block groups occupied by the uplink channel.

51. The device according to claim 50, wherein the configuration information uses a first bitmap to represent the first information and the second information, and bits in the first bitmap correspond to the frequency domain subbands one by one;
in the first bitmap, when a bit is a first preset value, it indicates that a frequency domain subband corresponding to the bit is occupied by the downlink channel, and when a bit is a second preset value, it indicates that a frequency domain subband corresponding to the bit is occupied by the uplink channel.

52. The device according to claim 50, wherein the configuration information uses a second bitmap to represent the first information and uses a third bitmap to represent the second information, and bits in the second bitmap and the third bitmap correspond to frequency domain subbands one by one;
in the second bitmap, when a bit is a first preset value, it indicates that a frequency domain subband corresponding to the bit is occupied by the downlink channel;
in the third bitmap, when a bit is a first preset value, it indicates that a frequency domain subband corresponding to the bit is occupied by the uplink channel.

53. The device according to any one of claims 50-52, wherein the configuration information further comprises the number of resource blocks included in each of the frequency domain subbands.

54. The device according to any one of claims 50-52, wherein a frame structure of the first cell is the same as that of an adjacent cell; or
a frame structure of the first cell is different from that of the adjacent cell; the device further comprises:
a communication module, to communicate with the user equipment in a beam forming mode or a different frequency networking mode.

55. The device according to claim 54, wherein the adjacent cell is an area covered by the base station, and the device further comprises:
a first adjusting module, to adjust the frame structures of the first cell and the adjacent cell so that the frame structures of the first cell and the adjacent cell are the same or different.

56. The device according to claim 54, wherein the adjacent cell is an area covered by a further base station, and the device further comprises:
a second adjustment module, to receive a message sent by the further base station, wherein the message indicates the frame structure of the adjacent cell; and to adjust the frame structure of the first cell according to the message, so that the frame structures of the first cell and the adjacent cell are the same or different.

57. The device according to claim 49, wherein the resources include time domain resources, the first information includes a first Start Orthogonal Frequency Division Multiplexing OFDM symbol occupied by the downlink channel and a first OFDM symbol length corresponding to the downlink channel, and the second information includes a second start OFDM symbol occupied by the uplink channel and a second OFDM symbol length corresponding to the uplink channel.

58. The device according to claim 49, wherein the resources include time domain resources, the first information includes a first Start Length Indication Value SLIV corresponding to the downlink channel, and the second information includes a second SLIV corresponding to the uplink channel;
the first SLIV is determined according to a first Start Orthogonal Frequency Division Multiplexing OFDM symbol occupied by the downlink channel and a first OFDM symbol length corresponding to the downlink channel, and the second SLIV is determined according to a second start OFDM symbol occupied by the uplink channel and a second OFDM symbol length corresponding to the uplink channel.

59. The device according to claim 57 or 58, wherein the device further comprises a determining unit, which is to:
when the base station is configured with the first start OFDM symbol and the first OFDM symbol length, determine the first information according to the configured first start OFDM symbol and the first OFDM symbol length; when the base station is not configured with the first start OFDM symbol and the first OFDM symbol length, assign a start OFDM symbol of the full-duplex time slot as the first start OFDM symbol, and assign an OFDM symbol length of the full-duplex time slot as the first OFDM symbol length, and determine the first information according to the assigned first start OFDM symbol and the assigned first OFDM symbol length; and/or
when the base station is configured with the second start OFDM symbol and the second OFDM symbol length, determine the second information according to the configured second start OFDM symbol and the second OFDM symbol length; when the base station is not configured with the second start OFDM symbol and the second OFDM symbol length, assign a start OFDM symbol of the full-duplex time slot as the second start OFDM symbol, assign an OFDM symbol length of the full-duplex time slot as the second OFDM symbol length, and determine the second information according to the assigned second start OFDM symbol and the assigned second OFDM symbol length.

60. The device according to claim 57 or 58, wherein in the full-duplex time slot, the OFDM symbol lengths occupied by the downlink channel and the uplink channel are the same as the OFDM symbol length of the full-duplex time slot.

61. The device according to claim 49, wherein the configuration information further comprises the number of full-duplex time slots included in at least one system frame.

62. The device according to claim 49, wherein the configuration information further comprises a fourth bitmap of at least one system frame, and bits in the fourth bitmap correspond to time slots one by one;
in the fourth bitmap, when a bit is a third preset value, it indicates that a time slot corresponding to the bit is a full-duplex time slot;
in the fourth bitmap, when a bit is a fourth preset value, it indicates that a time slot corresponding to the bit is a half-duplex time slot.

63. The device according to claim 62, wherein the base station is provided with multiple sets of configuration information, and each of the sets of configuration information has one assignment sequence number; in one system frame, configuration information adopted by each full-duplex time slot is configuration information corresponding to a target assignment sequence number, which is obtained by performing a mod operation on an index number of this full-duplex time slot and the number of the multiple sets of configuration information; or
in one system frame, the configuration information adopted by each full-duplex time slot is the configuration information of this full-duplex time slot specified in the first signaling; or
the first signaling further comprises a fifth bitmap; in one system frame, the configuration information adopted by each full-duplex time slot is determined according to the fifth bitmap; bits in the fifth bitmap correspond to time slots in the system frame one by one; and in the fifth bitmap, the time slots corresponding to the bits adopt configuration information corresponding to values of the bits.

64. The device according to claim 49, wherein effective time of the configuration information is a third start point.

65. The device according to claim 64, wherein the third start point is obtained by performing, by the base station, a mod operation on a system frame number and a duration of a full-duplex time slot, or, the third start point is preset in the user equipment and the base station.

66. The device according to claim 65, wherein the first signaling comprises the duration.

67. The device according to any one of claims 64-66, wherein the device further comprises:
a dispatch module, to dispatch the user equipment to receive and send data in the same frequency domain bandwidth according to the resources indicated by the configuration information when the third start point is reached.

68. The device according to any one of claims 49-52, 57-58 and 61-66, wherein the first signaling is a broadcast signaling or a user-specific signaling.

69. The device according to claim 49, wherein the sending module is further configured to:
send a second signaling to the user equipment when the base station is not provided with the configuration information, wherein the second signaling comprises dispatch information of the full-duplex time slot of the user equipment in the same frequency domain bandwidth.

70. The device according to claim 69, wherein the second signaling comprises dispatch information of at least one user equipment.

71. The device according to claim 70, wherein for each user equipment of the at least one user equipment,
the dispatch information of this user equipment indicates a frequency domain subband occupied by the user equipment for sending data and an Orthogonal Frequency Division Multiplexing OFDM symbol occupied by the user equipment for sending data, respectively; and/or,
the dispatch information of this user equipment indicates a frequency domain subband occupied by the user equipment for receiving data and an OFDM symbol occupied by the user equipment for receiving data, respectively.

72. The device according to claim 71, wherein frequency domain subbands occupied by different user equipments overlap, and OFDM symbols occupied by the different user equipments do not overlap; or
frequency domain subbands occupied by different user equipments do not overlap, and OFDM symbols occupied by the different user equipments overlap; or
frequency domain subbands occupied by different user equipments overlap, and OFDM symbols occupied by different user equipments overlap; or
frequency domain subbands occupied by different user equipments do not overlap, and OFDM symbols occupied by the different user equipments do not overlap; or
a frequency domain subband occupied for sending data overlaps with a frequency domain subband occupied for receiving data by a same user equipment, and an OFDM symbol occupied for sending data overlaps with an OFDM symbol occupied for receiving data, by the same user equipment; or
a frequency domain subband occupied for sending data does not overlap with a frequency domain subband occupied for receiving data by a same user equipment, and an OFDM symbol occupied for sending data overlaps with an OFDM symbol occupied for receiving data, by the same user equipment; or
a frequency domain subband occupied for sending data does not overlap with a frequency domain subband occupied for receiving data by a same user equipment, and an OFDM symbol occupied for sending data does not overlap with an OFDM symbol occupied for receiving data, by the same user equipment; or
a frequency domain subband occupied for sending data overlaps with a frequency domain subband occupied for receiving data by a same user equipment, and an OFDM symbol occupied for sending data does not overlap with an OFDM symbol occupied for receiving data, by the same user equipment.

73. The device according to any one of claims 69-72, wherein the second signaling is a downlink control indication.

74. The device according to any one of claims 49-52, 57-58, 61-66 and 69-72, wherein at least one cycle period is included within a validity period of the configuration information, and in each of the at least one cycle period, resources occupied by a full-duplex time slot at a same position are the same.

75. A device for resource assignment, which is applied to a user equipment, the device comprising:
a receiving module, to receive a first signaling sent by a base station, wherein the first signaling includes configuration information, and the configuration information includes first information indicating resources occupied by a downlink channel in a full-duplex time slot in a same frequency domain bandwidth of a first cell, and second information indicating resources occupied by an uplink channel in the full-duplex time slot;
an assignment module, to assign resources for the full-duplex time slot according to the first information and the second information.

76. The device according to claim 75, wherein the resources include frequency domain resources, the first information is used to indicate a frequency domain subband occupied by the downlink channel, and the second information is used to indicate a frequency domain subband occupied by the uplink channel, and the frequency domain subbands include at least one resource block or at least one resource block group; or
the first information is used to indicate a first start point and the number of resource blocks or resource block groups occupied by the downlink channel, and the second information is used to indicate a second start point and the number of resource blocks or resource block groups occupied by the uplink channel.

77. The device according to claim 76, wherein the configuration information uses a first bitmap to represent the first information and the second information, and bits in the first bitmap correspond to frequency domain subbands one by one;
in the first bitmap, when a bit is a first preset value, it indicates that a frequency domain subband corresponding to the bit is occupied by the downlink channel, and when a bit is a second preset value, it indicates that a frequency domain subband corresponding to the bit is occupied by the uplink channel.

78. The device according to claim 76, wherein the configuration information uses a second bitmap to represent the first information and uses a third bitmap to represent the second information, and bits in the second bitmap and the third bitmap correspond to frequency domain subbands one by one;
in the second bitmap, when a bit is a first preset value, it indicates that a frequency domain subband corresponding to the bit is occupied by the downlink channel;
in the third bitmap, when a bit is a first preset value, it indicates that a frequency domain subband corresponding to the bit is occupied by the uplink channel.

79. The device according to any one of claims 76-78, wherein the configuration information further comprises the number of resource blocks included in each of the frequency domain subbands.

80. The device according to any one of claims 76-78, wherein a frame structure of the first cell is the same as that of an adjacent cell; or
a frame structure of the first cell is different from that of the adjacent cell; the device further comprises
a communication module, to communicate with the base station in a beam forming mode or a different frequency networking mode.

81. The device according to claim 75, wherein the resources include time domain resources, the first information includes a first Start Orthogonal Frequency Division Multiplexing OFDM symbol occupied by the downlink channel and a first OFDM symbol length corresponding to the downlink channel, and the second information includes a second start OFDM symbol occupied by the uplink channel and a second OFDM symbol length corresponding to the uplink channel.

82. The device according to claim 75, wherein the resources include time domain resources, the first information includes a first Start Length Indication Value SLIV corresponding to the downlink channel, and the second information includes a second SLIV corresponding to the uplink channel;
the first SLIV is determined according to a first Start Orthogonal Frequency Division Multiplexing OFDM symbol occupied by the downlink channel and a first OFDM symbol length corresponding to the downlink channel, and the second SLIV is determined according to a second start OFDM symbol occupied by the uplink channel and a second OFDM symbol length corresponding to the uplink channel.

83. The device according to claim 75, wherein the configuration information further comprises the number of full-duplex time slots included in at least one system frame.

84. The device according to claim 75, wherein the configuration information further comprises a fourth bitmap of at least one system frame, bits in the fourth bitmap correspond to time slots one by one;
in the fourth bitmap, when a bit is a third preset value, it indicates that a time slot corresponding to the bit is a full-duplex time slot;
in the fourth bitmap, when a bit is a fourth preset value, it indicates that a time slot corresponding to the bit is a half-duplex time slot.

85. The device according to claim 84, wherein the first signaling comprises multiple sets of configuration information, and each of the sets of configuration information has one assignment sequence number; in one system frame, the configuration information adopted by each full-duplex time slot is configuration information corresponding to a target assignment sequence number, which is obtained by performing a mod operation on an index number of this full-duplex time slot and the number of the multiple sets of configuration information; or
in one system frame, the configuration information adopted by each full-duplex time slots is the configuration information of this full-duplex time slot specified in the first signaling; or
the first signaling further comprises a fifth bitmap; in one system frame, the configuration information adopted by each full-duplex time slot is determined according to the fifth bitmap; bits in the fifth bitmap correspond to time slots in the system frame one by one; and in the fifth bitmap, the time slots corresponding to the bits adopt configuration information corresponding to values of the bits.

86. The device according to claim 75, wherein effective time of the configuration information is a third start point.

87. The device according to claim 86, wherein the third start point is obtained by performing, by the user equipment, a mod operation on a system frame number and a duration of a full-duplex time slot, or, the third start point is preset in the user equipment and the base station.

88. The device according to claim 87, wherein the first signaling comprises the duration.

89. The device according to any one of claims 86-88, wherein the device further comprises:
a dispatch module, to accept, according to the resources indicated by the configuration information, a dispatch from the base station to receive and send data in the same frequency domain bandwidth when the third start point is reached.

90. The device according to any one of claims 75-78 and 81-88, wherein the first signaling is a broadcast signaling or user-specific signaling.

91. The device according to claim 75, wherein the receiving module is further to:
receive a second signaling sent by the base station, wherein the second signaling comprises dispatch information of the full-duplex time slot of the user equipment in the same frequency domain bandwidth.

92. The device according to claim 91, wherein the second signaling comprises dispatch information of at least one user equipment.

93. The device according to claim 92, wherein, for each user equipment of the at least one user equipment,
the dispatch information of the user equipment indicates a frequency domain subband occupied by the user equipment for sending data and an Orthogonal Frequency Division Multiplexing OFDM symbol occupied by the user equipment for sending data, respectively; and/or,
the dispatch information of the user equipment indicates a frequency domain subband occupied by the user equipment for receiving data and an OFDM symbol occupied by the user equipment for receiving data, respectively.

94. The device according to claim 93, wherein frequency domain subbands occupied by different user equipments overlap, and OFDM symbols occupied by the different user equipments do not overlap; or
frequency domain subbands occupied by different user equipments do not overlap, and OFDM symbols occupied by the different user equipments overlap; or
frequency domain subbands occupied by different user equipments overlap, and OFDM symbols occupied by the different user equipments overlap; or
frequency domain subbands occupied by different user equipments do not overlap, and OFDM symbols occupied by the different user equipments do not overlap; or
a frequency domain subband occupied for sending data overlaps with a frequency domain subband occupied for receiving data by a same user equipment, and an OFDM symbol occupied for sending data overlaps with an OFDM symbol occupied for receiving data, by the same user equipment; or
a frequency domain subband occupied for sending data does not overlap with a frequency domain subband occupied for receiving data by a same user equipment, and an OFDM symbol occupied for sending data overlaps with an OFDM symbol occupied for receiving data, by the same user equipment; or
a frequency domain subband occupied for sending data does not overlap with a frequency domain subband occupied for receiving data by a same user equipment, and an OFDM symbol occupied for sending data does not overlap with an OFDM symbol occupied for receiving data, by the same user equipment; or
a frequency domain subband occupied for sending data overlaps with a frequency domain subband occupied for receiving data by a same user equipment, and an OFDM symbol occupied for sending data does not overlap with an OFDM symbol occupied for receiving data, by the same user equipment.

95. The device according to any one of claims 91-94, wherein the second signaling is a downlink control indication.

96. The device according to any one of claims 75-78, 81-88 and 91-94, wherein at least one cycle period is included within a validity period of the configuration information, and in each of the at least one cycle period, resources occupied by a full-duplex time slot at a same position are the same.

97. A base station comprises a processor and a machine-readable storage medium having stored thereon machine-executable instructions that can be executed by the processor, wherein the machine-executable instructions cause the processor to perform steps of the method of any one of claims 1-26.

98. A user equipment comprises a processor and a machine-readable storage medium having stored thereon machine-executable instructions that can be executed by the processor, wherein the machine-executable instructions cause the processor to perform steps of the method of any one of claims 27-48.

99. A machine-readable storage medium having stored thereon machine-executable instructions that can be executed by a processor, wherein the machine-executable instructions cause the processor to perform steps of the method of any one of claims 1-26.

100. A machine-readable storage medium having stored thereon machine-executable instructions that can be executed by a processor, wherein the machine-executable instructions cause the processor to perform steps of the method of any one of claims 27-48.

101. A computer program product, wherein the computer program product causes a processor to perform steps of the method of any one of claims 1-26.

102. A computer program product, wherein the computer program product causes a processor to perform steps of the method of any one of claims 27-48.
